(19) Europäisches Patentamt / European Patent Office / Office européen des brevets

(11) **EP 4 398 130 A1**

(12) **EUROPEAN PATENT APPLICATION**
published in accordance with Art. 153(4) EPC

(43) Date of publication:
**10.07.2024 Bulletin 2024/28**

(21) Application number: **22864714.5**

(22) Date of filing: **02.09.2022**

(51) International Patent Classification (IPC):
*G06F 17/10* *(2006.01)*

(52) Cooperative Patent Classification (CPC):
**G06F 17/10**

(86) International application number:
**PCT/JP2022/033059**

(87) International publication number:
**WO 2023/033132 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021 JP 2021143668**

(71) Applicant: **Japan Science and Technology Agency
Kawaguchi-shi, Saitama 332-0012 (JP)**

(72) Inventors:
• **AZUMA Shun-ichi
Nagoya-shi Aichi 464-8601 (JP)**
• **BANNO Ikumi
Nagoya-shi Aichi 464-8601 (JP)**
• **IMURA Jun-ichi
Tokyo 152-8550 (JP)**

(74) Representative: **Noble, Nicholas et al
Kilburn & Strode LLP
Lacon London
84 Theobalds Road
London WC1X 8NL (GB)**

(54) **DATA PROCESSING DEVICE, CONTROL SYSTEM, DATA PROCESSING METHOD, AND PROGRAM**

(57) A data processing device to estimate the limit:

[equation 140]

$$G(\infty)$$

of a controllability Gramian:

[equation 138]

$$G(t)$$

defined by:

EP 4 398 130 A1

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix, comprises:
a data acquisition unit that acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a controllability Gramian calculation unit that defines:

[equation 75]

$$z(t) \in \mathbf{R}^n$$

expressed as:
[equation 74]

$$\dot{z}(t) = A^\top z(t) \qquad\qquad (13)$$

, calculates:
[equation 81]

$$z^\top(t_2) X z(t_2) - z^\top(t_1) X z(t_1) = -\int_{t_1}^{t_2} z^\top(t) B B^\top z(t) dt \qquad (16)$$

[equation 89]

$$z(t + t_{i1}, t_{i1}, x_{i1}) = (E(t) E_0^{-1})^\top x_{i1}$$

and estimates:

[equation 146]

$$G(\infty) = X$$

by numerically obtaining the solution X of the following linear equation:

[equation 6]

$$x_{i1}^\top (E(h)E_0^{-1}) X (E(h)E_0^{-1})^\top x_{i1} - x_{i1}^\top X x_{i1}$$

$$= -\int_0^h x_{i1}^\top (E(t)E_0^{-1}) B B^\top (E(t)E_0^{-1})^\top x_{i1} dt$$

$$(i = 1, 2, \ldots, q)$$

with respect to:

[equation 157]

$$E(t) := \begin{bmatrix} x(t + t_{11}, t_{11}, x_{11}) & x(t + t_{21}, t_{21}, x_{21}) & \cdots & x(t + t_{n1}, t_{n1}, x_{n1}) \end{bmatrix}$$

[equation 158]

$$E_0 := \begin{bmatrix} x_{11} & x_{21} & \cdots & x_{n1} \end{bmatrix}$$

; and
an output unit that outputs the input matrix when the controllability Gramian is maximized based on the estimated maximization condition.

# FIG. 1

SET OF TIME-SERIES STATE DATA

DATA PROCESSING DEVICE

1

DATA ACQUISITION UNIT
10

CONTROLLABILITY GRAMIAN CALCULATION UNIT
12

OUTPUT UNIT
15

CONTROLLABILITY GRAMIAN

**Description**

TECHNICAL FIELD

This disclosure relates to a data processing device, a control system, a data processing method and a program.

BACKGROUND ART

A controllability Gramian is known as an indicator for controllability of a system, see, for example, Non-Patent Document 1-6. Whether a system is controllable can be determined by whether the controllability Gramian is regular. Furthermore, the magnitude of the eigenvalues of the controllability Gramian quantitatively indicates the degree of influence of the input on the state.

Prior Art Literature

Non-Patent Literature

Non-Patent Literature 1 : F. Pasqualetti, S. Zampieri, and F. Bullo, "Controllability metrics, limitations and algorithms for complex networks," IEEE Transactions on Control of Network Systems, vol. 1, no. 1, pp. 40-52, 2014.
Non-Patent 2 : V. Tzoumas, M.A. Rahimian, G.J. Pappas, and A. Jadbabaie, "Minimal actuator placement with bounds on control effort," IEEE Transactions on Control of Network Systems, vol. 3, no. 1, pp. 40-52, 2016.
Non-patent 3 : K. Kashima, "Noise response data reveal novel controllability Gramian for nonlinear network dynamics," Scientific Reports vol. 6, Art. 27300, 2016.
Non-Patent 4 : V.M. Preciado and M.A. Rahimian, "Controllability Gramian spectra of random networks," 2016 American Control Conference, pp. 3874-3879, 2016.
Non-Patent 5 : X. Cheng and J.M.A. Scherpen, "A new controllability Gramian for semistable systems and its application to approximation of directed networks," 56th Annual Conference on Decision and Control, pp. 3823-3828, 2017.
Non-Patent 6 : S. Zhao and F. Pasqualetti, "Networks with diagonal controllability Gramians: analysis, graphical conditions, and design algorithms," Automatica, vol. 102, pp. 10-18, 2019.
Non-Patent 7 : Z. Wang and D. Liu, "Data-based controllability and observability analysis of linear discrete-time systems," IEEE Transactions on Neural Networks, vol. 22, no. 12, pp. 2388-2392, 2011.
Non-Patent 8 : D. Bhattacharjee, B. Klose, G.B. Jacobs, and M.S. Hemati, "Data-driven selection of actuators for optimal control of airfoil separation," Theoretical and Computational Fluid Dynamics, vol. 34, no. 4, pp. 557-575, 2020.
Non-Patent Document 9 : K. Zhou, J.C. Doyle, and K. Glover, Robust and Optimal Control, Prentice Hall, 1996.
Non-Patent Document 10 : C. Kenney and G. Hewer, "Trace norm bounds for stable Lyapunov operators," Linear Algebra and its Applications, vol. 221, pp. 1-18, 1995.

SUMMARY OF INVENTION

Technical Problem

A Controllability Gramian can be easily calculated if a mathematical model of a system is known. Hereinafter, calculation methods based on the mathematical model of a system are called "model-based methods". However, the amount of data necessary for modeling the system is not always available. In such cases, a mathematical model of the system cannot be obtained.
In contrast to the model-based method, calculation methods that calculate based on data of a state trajectory of a system without using a mathematical model are called "data-driven methods". Data-driven methods have the advantage of requiring fewer decision variables than model-based methods because they do not need to identify a mathematical model of the system.
Methods for estimating controllability Gramians, see, for example, Non-Patent Document 7, and maximizing controllability Gramians, see, for example, Non-Patent Document 8, using data-driven methods are known. Both of these methods are discrete-time models formulated on the basis of discrete time. However, the physical information contained in the data is represented clearly in the continuous-time model, which is formulated on the basis of continuous time, whereas the discrete-time model has a problem of unclarity. In other words, conventional discrete-time models have the problem that it is difficult to utilize prior knowledge about the characteristics of continuous-time systems.

The purpose of this disclosure is to estimate the controllability Gramian for a system of which mathematical model is unknown, using a data-driven method for continuous-time systems.

SOLUTION TO PROBLEM

In order to solve the above problem, a data processing device according to an embodiment of this disclosure estimates the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x\left(t\right)$$

is an n-dimensional vector representing the state of a control object,:

[equation 139]

$$u\left(t\right)$$

is an m-dimensional vector representing the control input, A is an unknown n x n matrix and B is a known n x m matrix.

This data processing device comprises:

a data acquisition unit that acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;

a controllability Gramian calculation unit that defines:

[equation 75]

$$z(t) \in \mathbf{R}^n$$

expressed as:

[equation 74]

$$\dot{z}(t) = A^\top z(t) \qquad (13)$$

based on the sets of state data:

[equation 145]

$$E(t)$$

acquired by the data acquisition unit 10, calculates:

[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimates:

[equation 146]

$$G(\infty) = X$$

by numerically obtaining the solution X of the following linear equation:

[equation 6]

$$x_{i1}^\top(E(h)E_0^{-1})X(E(h)E_0^{-1})^\top x_{i1} - x_{i1}^\top X x_{i1}$$
$$= -\int_0^h x_{i1}^\top(E(t)E_0^{-1})BB^\top(E(t)E_0^{-1})^\top x_{i1}dt$$
$$(i = 1, 2, \ldots, q)$$

with respect to:

[equation 157]

$$E(t) := [x(t + t_{11}, t_{11}, x_{11})\ \ x(t + t_{21}, t_{21}, x_{21})\ \cdots\ x(t + t_{n1}, t_{n1}, x_{n1})]$$

[equation 158]

$$E_0 := [x_{11}\ \ x_{21}\ \cdots\ x_{n1}]$$

; and
an output unit that outputs the controllability Gramian estimated by the controllability Gramian calculation unit.

In one embodiment, the set of time-series state data acquired by the data acquisition unit may include noise and the controllability Gramian calculation unit estimates:

[equation 146]

$$G(\infty) = X$$

by numerically obtaining the solution X of the following liner equation:
[equation 108]

$$x_{i1}^{\top}(E(h)E_0^+)X(E(h)E_0^+)^{\top}x_{i1} - x_{i1}^{\top}Xx_{i1}$$
$$= -\int_0^h x_{i1}^{\top}(E(t)E_0^+)BB^{\top}(E(t)E_0^+)^{\top}x_{i1}dt$$
$$(i = 1, 2, \ldots, p) \qquad (23)$$

instead of the liner equation:

[equation 6]

$$x_{i1}^{\top}(E(h)E_0^{-1})X(E(h)E_0^{-1})^{\top}x_{i1} - x_{i1}^{\top}Xx_{i1}$$
$$= -\int_0^h x_{i1}^{\top}(E(t)E_0^{-1})BB^{\top}(E(t)E_0^{-1})^{\top}x_{i1}dt$$
$$(i = 1, 2, \ldots, q)$$

In one embodiment, the controllability Gramian calculation unit performs numerical calculations using prior knowledge about the signs of some or all of the matrix components of the solution X.
Another embodiment of this disclosure is also a data processing device. This data processing device estimates the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

This data processing device comprises:

a data acquisition unit that acquires a set of time-series state data:

[equation 5]

$$x([t_{11}, t_{12}], x_{11}), \ x([t_{21}, t_{22}], x_{11}), \cdots, \ x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a maximization condition calculation unit that estimates the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^{\top}(t_{i2}, t_{i1}, x_{i1}) Y x(t_{i2}, t_{i1}, x_{i1}) - x_{i1}^{\top} Y x_{i1}$$
$$= -\int_{t_{i1}}^{t_{i2}} x^{\top}(t, t_{i1}, x_{i1}) Q x(t, t_{i1}, x_{i1}) dt$$
$$(i = 1, 2, \ldots, q)$$

when:

[equation 7]

$$Q := I$$

holds ; and
an output unit that outputs the input matrix when the controllability Gramian is maximized based on the estimated maximization condition.

In one embodiment, the maximization condition calculation unit may obtain a first input matrix:

[equation 11]

$$\tilde{B}_1^*$$

by calculating the unit eigenvector corresponding to the maximum eigenvalue of:

[equation 9]

$$\tilde{\tilde{Y}}^*$$

when:

[equation 47]

$$\mathbf{B} \subset \bigcup_{m=1}^{\infty} \mathbf{R}^{n \times m}$$

holds.
In one embodiment, the maximization condition calculation unit may obtain a second input matrix:

[equation 12]

$$\tilde{B}_2^*$$

by calculating the n × n matrix in which the (k, k) component is 1 and the other components are 0, where the (k, k) component is the one that is the maximum among the diagonal components of:

[equation 9]

$$\tilde{\tilde{Y}}^*$$

, when:

[equation 49]

$$\mathbf{B} = \mathbf{D}_n$$

holds.

Yet another embodiment of this disclosure is a control system. This control system controls external control objects. This control system comprises:

a sensor that detects a set of time-series state data from the control objects;
the aforementioned data processing device; and
a control unit to control the control objects,
wherein the sensor transmits the detected set of state data to the data acquisition unit of the data processing device,
wherein the data processing device transmits the estimated:

[equation 146]

$$G(\infty) = X$$

to the control unit and
wherein the control unit controls the control objects based on:

[equation 146]

$$G(\infty) = X$$

Yet another embodiment of this disclosure is a data processing method. This method estimates the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix.

This method comprises:

acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
defining:

[equation 75]

$$z(t) \in \mathbf{R}^n$$

expressed as:
[equation 74]

$$\dot{z}(t) = A^\top z(t) \qquad (13)$$

based on the sets of state data:

[equation 145]

$$E(t)$$

acquired by the data acquisition unit 10, calculating:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = \left(E(t)E_0^{-1}\right)^\top x_{i1}$$

and estimating:

[equation 146]

$$G(\infty) = X$$

by numerically obtaining the solution X of the following linear equation:

[equation 6]

$$x_{i1}^\top (E(h)E_0^{-1}) X (E(h)E_0^{-1})^\top x_{i1} - x_{i1}^\top X x_{i1}$$
$$= -\int_0^h x_{i1}^\top (E(t)E_0^{-1}) BB^\top (E(t)E_0^{-1})^\top x_{i1} dt$$
$$(i = 1, 2, \ldots, q)$$

with respect to:

[equation 157]

$$E(t) := \begin{bmatrix} x(t + t_{11}, t_{11}, x_{11}) & x(t + t_{21}, t_{21}, x_{21}) & \cdots & x(t + t_{n1}, t_{n1}, x_{n1}) \end{bmatrix}$$

[equation 158]

$$E_0 := \begin{bmatrix} x_{11} & x_{21} & \cdots & x_{n1} \end{bmatrix}$$

; and
outputting the estimated controllability Gramian.

Yet another embodiment of this disclosure is also a data processing method. This method estimates the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix. This method comprises:

acquiring a set of time-series state data:

[equation 5]

$$x([t_{11}, t_{12}], x_{11}), \; x([t_{21}, t_{22}], x_{11}), \; \cdots, \; x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
estimating the matrix B which maximizes:

[equation 141]

$$\mathrm{tr}(G(\infty))$$

by numerically obtaining the solution:

[equation 9]

$$\tilde{Y}^{*}$$

of the following linear equation:

[equation 8]

$$x^{\top}(t_{i2}, t_{i1}, x_{i1}) Y x(t_{i2}, t_{i1}, x_{i1}) - x_{i1}^{\top} Y x_{i1}$$
$$= - \int_{t_{i1}}^{t_{i2}} x^{\top}(t, t_{i1}, x_{i1}) Q x(t, t_{i1}, x_{i1}) dt$$
$$(i = 1, 2, \ldots, q)$$

when:

[equation 7]

$$Q := I$$

holds
; and
outputting the input matrix when the controllability Gramian is maximized based on the estimated maximization condition.

Another embodiment of this disclosure is a program. This program estimates the limit:

[equation 140]

$$G(\infty)$$

of a controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix.

This program causes the computer to perform the method, comprising:

acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
defining:

[equation 75]

$$z(t) \in \mathbf{R}^n$$

expressed as:
[equation 74]

$$\dot{z}(t) = A^\top z(t) \qquad (13)$$

based on the sets of state data:

[equation 145]

$$E(t)$$

acquired by the data acquisition unit 10, calculating:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimating:

[equation 146]

$$G(\infty) = X$$

by numerically obtaining the solution X of the following linear equation:

[equation 6]

$$x_{i1}^{\top}(E(h)E_0^{-1})X(E(h)E_0^{-1})^{\top}x_{i1} - x_{i1}^{\top}Xx_{i1}$$
$$= -\int_0^h x_{i1}^{\top}(E(t)E_0^{-1})BB^{\top}(E(t)E_0^{-1})^{\top}x_{i1}dt$$
$$(i = 1, 2, \ldots, q)$$

with respect to:

[equation 157]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})]$$

[equation 158]

$$E_0 := [x_{11} \quad x_{21} \quad \cdots \quad x_{n1}] \; ;$$

and
outputting the estimated controllability Gramian.

Yet another embodiment of this disclosure is also a program. This program estimates the matrix B which maximizes the trace:

[equation 141]

$$\text{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

This program causes the computer to perform the method, comprising:

acquiring a set of time-series state data:

[equation 5]

$$x([t_{11}, t_{12}], x_{11}),\ x([t_{21}, t_{22}], x_{11}),\ \cdots,\ x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
estimating the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^\top(t_{i2}, t_{i1}, x_{i1}) Y x(t_{i2}, t_{i1}, x_{i1}) - x_{i1}^\top Y x_{i1}$$
$$= -\int_{t_{i1}}^{t_{i2}} x^\top(t, t_{i1}, x_{i1}) Q x(t, t_{i1}, x_{i1}) dt$$
$$(i = 1, 2, \ldots, q)$$

when:

[equation 7]

$$Q := I$$

holds
; and
outputting the input matrix when the controllability Gramian is maximized based on the estimated maximization condition.

Yet another embodiment of this disclosure is a data processing device. This data processing device estimates:

[equation 232]

$$G_{\mathrm{c}}(A + \Delta)$$

when:

[equation 1]

$$\dot{x}(t) = Ax(t) + Bu(t)$$

holds and the limit of a controllability Gramian of a matrix A, which is defined by:

[equation 2]

$$G(t) := \int_0^t e^{A\tau} BB^\top e^{A^\top \tau} d\tau \text{ ,}$$

is defined by:

[equation 231]

$$G_{\mathrm{c}}(A) \text{ ,}$$

where:

[equation 142]

$$x(t)$$

is an n-dimensional vector representing the state of a control object,:

[equation 139]

$$u(t)$$

is an m-dimensional vector representing the control input, A is an unknown n x n matrix, is a known n x m matrix and $\Delta$ the amount of change in A. This data processing device comprises:

a data acquisition unit that acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a controllability Gramian calculation unit that defines:

[equation 75]

$$z(t) \in \mathbf{R}^n$$

expressed as:
[equation 74]

$$\dot{z}(t) = A^\top z(t) \qquad (13)$$

based on the sets of state data:

[equation 145]

$$E(t)$$

acquired by the data acquisition unit 10, calculates:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimates:

[equation 233]

$$G_c(A + \Delta) = X$$

by numerically obtaining the solution X of the following linear equation.
[equation 225]

$$z_i^\top(h)Xz_i(h) - z_i^\top(0)Xz_i(0)$$

$$+ \int_0^h z_i^\top(t)(\Delta X + X\Delta^\top)z_i(t)\, dt$$

$$= -\int_0^h z_i^\top(t)BBz_i(t)\, dt \quad (i = 1, 2, \ldots, N) \qquad (47)$$

with respect to:

[equation 157]

$$E(t) := \begin{bmatrix} x(t + t_{11}, t_{11}, x_{11}) & x(t + t_{21}, t_{21}, x_{21}) & \cdots & x(t + t_{n1}, t_{n1}, x_{n1}) \end{bmatrix}$$

[equation 158]

$$E_0 := \begin{bmatrix} x_{11} & x_{21} & \cdots & x_{n1} \end{bmatrix} ;$$

and
an output unit that outputs the estimated controllability Gramian.

Any combination of the above components, and any transformation of the expression of the invention among devices, methods, systems, recording media, computer programs, etc., is also valid as a form of the invention.

ADVANTAGEOUS EFFECTS OF INVENTION

According to the present disclosure,
the controllability Gramian for a system of which mathematical model is unknown can be estimated, using a data-driven method for continuous-time systems.

BRIEF DESCRIPTION OF DRAWINGS

Fig. 1 is a functional block diagram of a data processing system according to the first embodiment;
Fig. 2 is a functional block diagram of a data processing system according to the second embodiment;
Fig. 3 is a functional block diagram of a control system according to the seventh embodiment;
Fig. 4 is a functional block diagram of a control system according to the eighth embodiment;
Fig. 5 is a flowchart showing the processing procedure of a data processing method according to the ninth embodiment;
Fig. 6 is a flowchart showing the processing procedure of a data processing method according to the tenth embodiment;
Fig. 7 shows time series data without noise in the time interval:

[equation 151]

$$\begin{bmatrix} t_{11}, t_{12} \end{bmatrix} ;$$

Fig. 8 shows time series data without noise in the time interval:

[equation 152]

$$[t_{21}, t_{22}] \ ;$$

Fig. 9 shows time series data without noise in the time interval:

[equation 153]

$$[t_{31}, t_{32}] \ ;$$

Fig. 10 shows time series data without noise in the time interval:

[equation 154]

$$[t_{41}, t_{42}] \ ;$$

Fig. 11 shows time series data without noise in the time interval:

[equation 155]

$$[t_{51}, t_{52}]$$

$$;$$

Fig. 12 shows time series data without noise in the time interval:

[equation 156]

$$[t_{61}, t_{62}]$$

$$;$$

Fig. 13 shows time series data with noise in the time interval:

[equation 151]

$$[t_{11}, t_{12}]$$

;

Fig. 14 shows time series data with noise in the time interval:

[equation 152]

$$[t_{21}, t_{22}]$$

;

Fig. 15 shows time series data with noise in the time interval:

[equation 153]

$$[t_{31}, t_{32}]$$

;

Fig. 16 shows time series data with noise in the time interval:

[equation 154]

$$[t_{41}, t_{42}]$$

;

Fig. 17 shows time series data with noise in the time interval:

[equation 155]

$$[t_{51}, t_{52}]$$

;

Fig. 18 shows time series data with noise in the time interval:

[equation 156]

$$[t_{61}, t_{62}] \; ;$$

and
Fig. 19 is a functional block diagram of a control system for a variant according to the seventh embodiment.

DESCRIPTION OF EMBODIMENTs

The disclosure will be explained below with reference to drawings based on suitable embodiments. The embodiments are examples rather than limitations of the disclosure. All features or combinations of features described in the embodiments are not necessarily essential to the disclosure. Identical or equivalent components, parts, and processes shown in each drawing shall be given the same symbol, and redundant explanations will be omitted where appropriate. The scale and shape of each part shown in each drawing are set for convenience in order to facilitate explanation, and are not to be construed as limiting unless otherwise noted. When terms such as "first," "second," etc. are used in this specification or in the claims, unless otherwise mentioned, these terms do not indicate any order or degree of importance, but are intended only to distinguish one configuration from another. In addition, in each drawing, some parts of the components that are not important in explaining the embodiments are omitted.

Before describing the specific embodiments, let us first explain the basic findings.

Definition of symbols.

The following are definitions of mathematical symbols used herein.

R: real number.

[equation 128]

$$\mathbf{R}_{+} :$$

positive real number.

[equation 129]

$$\mathbf{R}_{0+} :$$

non-negative real number.

[equation 130]

$$\mathbf{S}_{n} :$$

$n \times n$ symmetric matrix.

[equation 131]

$$\mathbf{D}_n \quad :$$

n × n diagonal matrix.
0: zero matrix.
I: unit matrix.

[equation 132]

$$e_i \quad :$$

the i-th standard basis of the n-dimensional real vector space.

[equation 133]

$$A^+ \quad :$$

Moore-Penrose pseudo-inverse of matrix A.

[equation 134]

$$\lambda_{max}(A) \quad :$$

: the maximum eigenvalue of real symmetric matrix of which all eigenvalues are real numbers.

[equation 135]

$$\mathrm{tr}(A) :$$

trace of square matrix A.

Note that for any square matrices A and B:

[equation 13]

$$\mathrm{tr}(AB) = \mathrm{tr}(BA)$$

holds.

[equation 14]

$$\|A\|_F \quad :$$

Frobenius norm of matrix A, i.e.,:

[equation 15]

$$\|A\|_F = \sqrt{\mathrm{tr}(A^\top A)}$$

holds.

Furthermore, for an n × n symmetric matrix P of which (i, j) components are:

[equation 136]

$$p_{ij} \quad '$$

i.e.,:

[equation 137]

$$p_{ij} = p_{ji}$$

,

column vector:

[equation 16]

$$\mathrm{rvec}(P) \in \mathbf{R}^{(1/2)n(n+1)}$$

and row vector:

[equation 17]

$$\mathrm{lvec}(x) \in \mathbf{R}^{(1/2)n(n+1)}$$

are defined as follows:

[equation 18]

$$\mathrm{rvec}(P) = \begin{bmatrix} p_{11} & | & p_{12} & p_{22} & | & \cdots & | & p_{1n} & p_{2n} & \cdots & p_{nn} \end{bmatrix}^{\top}$$

[equation 19]

$$x^{\top} P x = \mathrm{lvec}(x)\mathrm{rvec}(P)$$

.

For example,:

[equation 22]

$$\mathrm{lvec}(x) = \begin{bmatrix} x_1^2 & 2x_1 x_2 & x_2^2 \end{bmatrix}$$

[equation 23]

$$\mathrm{rvec}(P) = \begin{bmatrix} p_{11} & p_{12} & p_{22} \end{bmatrix}^{\top}$$

holds for:

[equation 20]

$$x = \begin{bmatrix} x_1 \\ x_2 \end{bmatrix} \in \mathbf{R}^2$$

[equation 21]

$$P = \begin{bmatrix} p_{11} & p_{12} \\ p_{21} & p_{22} \end{bmatrix} \in \mathbf{S}_2$$

respectively.

[Linear Systems and controllability Gramians] We consider the following linear system.
[equation 24]

$$\dot{x}(t) = Ax(t) + Bu(t) \qquad (1)$$

Here,:

[equation 25]

$$x(t) \in \mathbf{R}^n$$

is the state of the system,:

[equation 26]

$$u(t) \in \mathbf{R}^m$$

is the control input,:

[equation 27]

$$A \in \mathbf{R}^{n \times n}$$

is an n x n constant matrix and:

[equation 28]

$$B \in \mathbf{R}^{n \times m}$$

is an n × m constant matrix.

In this case, the controllability Gramian:

[equation 138]

$$G(t)$$

 is defined as follows.

[equation 29]

$$G(t) := \int_0^t e^{A\tau} B B^\top e^{A^\top \tau} d\tau \qquad (2)$$

Here,:

[equation 30]

$$t \in \mathbf{R}_+$$

holds.

The controllability Gramian represents the set of states that can be reached at time t, starting from the initial state given a control input:

[equation 139]

$$u(t)$$

satisfying the following.

[equation 31]

$$\int_0^t \|u(\tau)\|_2 d\tau = 1$$

[equation 138]

$$G(t)$$

is regular when the system is controllable, i.e.,:

[equation 32]

$$\mathrm{rank}([B \quad AB \quad \cdots \quad A^{n-1}B]) = n$$

holds.

The set of states that can be reached in this case is expressed as below.

[equation 33]

$$\{x \in \mathbf{R}^n \mid x^\top G^{-1}(t)x \leq 1\}$$

In particular, the direction that can be reached can be quantified by the limit of controllability Gramians:

[equation 140]

$$G(\infty)$$

in the following.

[equation 144]

$$t = \infty$$

[equation 141]:

$$\mathrm{tr}(G(\infty))$$

is the sum of the eigenvalues of matrix below.

[equation 140]

$$G(\infty)$$

Therefore,:

[equation 141]

$$\mathrm{tr}(G(\infty))$$

is a measure of the strength of controllability of the system.
The following lemma is the basis for the computation of the controllability Gramian, see, for example, Non-Patent Literature 9.

(Lemma 1)

For the system shown in (1), we consider the Lyapunov equation as below.
[equation 34]

$$X A^\top + A X = -B B^\top \qquad (3)$$

Here,:

[equation 35]

$$X \in \mathbf{R}^{n \times n}$$

are the unknown variables in equation (1). If matrix A is a Hurwitz matrix ,i.e., the real part of all eigenvalues of matrix A is negative, there exists a unique solution X, which is equal to the following.

[equation 140]

$$G(\infty)$$

(End of Lemma 1)

[Data-driven estimation and maximization problem] Once the mathematical model of (1) is obtained, the controllability Gramian:

[equation 140]

$$G(\infty)$$

is computable and can be optimized by (2) or (3). However, another approach is needed if a mathematical model is not available. One possible approach is to use measured data on the behavior of the system. This is formulated as follows.
We denote the state (1):

[equation 142]

$$x(t)$$

by:

[equation 40]

$$x(t, t_1, x_1) \in \mathbf{R}^n \qquad ,$$

with respect to:

[equation 36]

$$t_i \in \mathbf{R}_{0+} \quad (i = 1, 2)$$

and:

[equation 37]

$$x_1 \in \mathbf{R}^n \quad,$$

under the conditions of:

[equation 38]

$$x(t_1) = x_1$$

and:

[equation 39]

$$u(t) \equiv 0$$

Also, we denote the segment of the state trajectory in the time interval under the same boundary conditions and inputs as above:

[equation 41]

$$[t_1, t_2]$$

by the following.

[equation 42]

$$x([t_1, t_2], x_1) \subset [t_1, t_2] \times \mathbf{R}^n$$

Therefore, the problem of estimating and maximizing:

[equation 140]

$$G(\infty)$$

based on given data can be organized as follows.

(Problem 1)

For the system shown in (1), let matrix A be a Hurwitz matrix and unknown. Let a set of data:

[equation 43]

$$x([t_{i1}, t_{i2}], x_{i1}) \quad (i = 1, 2, \ldots; q)$$

consisting of segments of q state trajectories is given.
Here,:

[equation 44]

$$t_{i1} < t_{i2}$$

holds.

(i) We estimate:

[equation 140]

$$G(\infty)$$

when a known input matrix B is given.
(ii) We obtain the input matrix:

[equation 46]

$$B \in \mathbf{B}$$

that maximizes:

[equation 141]

$$\mathrm{tr}(G(\infty))$$

under the conditions of the following.

[equation 45]

$$\|B\|_F \leq 1$$

Here,:

[equation 47]

$$\mathbf{B} \subset \bigcup_{m=1}^{\infty} \mathbf{R}^{n \times m}$$

is a given pair of possible input matrices.

Note the following four points. First, in Problem 1(i), the input matrix B is assumed to be known. On the other hand, the main objective of Problem 1(ii) is to find the optimal input channel for controlling the system. From this point of view, Problem 1(i) corresponds to a performance analysis of the input matrix B. Namely, in this case, the input matrix B is evaluated to measure the performance of the following.

[equation 140]

$$G(\infty)$$

Second, in general,:

[equation 140]

$$G(\infty)$$

increases with the norm of B. Therefore, the condition:

[equation 45]

$$\|B\|_F \leq 1$$

is required for the maximization of:

[equation 141]

$$\mathrm{tr}(G(\infty))$$

in Problem 1(ii).

Third, although B can be chosen flexibly, the following two settings are essential.

[equation 47]

$$\mathbf{B} \subset \bigcup_{m=1}^{\infty} \mathbf{R}^{n \times m}$$

[equation 49]

$$\mathbf{B} = \mathbf{D}_n$$

The former is the case where the inputs to the system are completely arbitrary. The latter is useful when the system is a network of n nodes, with one input added to each node. As for the other settings of B, approximate solutions can be obtained from the above settings. This may be obtained, for example, by truncating less influential part of B, as in the low-rank matrix approximation based on singular value decomposition.

Fourth, it is assumed that the resulting set of data is a continuous-time signal and contains no noise. However, even if this assumption does not hold, the method described herein is still applicable to the above problem. This point is discussed below.

[Solving the data-driven Lyapunov equation in stability analysis]

We consider the system (1) with B = 0.
[equation 50]

$$\dot{x}(t) = Ax(t) \qquad (4)$$

In this system, the Lyapunov equation is given by the following.
[equation 51]

$$YA + A^\top Y = -Q \qquad (5)$$

Here,:

[equation 52]

$$Q \in \mathbf{S}_n$$

is a given symmetric matrix and:

[equation 53]

$$Y \in \mathbf{S}_n$$

is the unknown variable in this equation. The unique solution:

[equation 53]

$$Y \in \mathbf{S}_n$$

exists if A is a Hurwitz matrix. Note that (5) is different from (3) even though:

[equation 54]

$$Q = BB^\top$$

holds.

We now consider solving (5) when A is unknown and a set of state trajectory data is given. The problem is formulated as follows.

(Problem 2)

We assume that the matrix A is a Hurwitz matrix and is unknown with respect to the system shown in (4). We assume that a symmetric matrix:

[equation 52]

$$Q \in \mathbf{S}_n$$

and a set of data consisting of segments of q state orbits:

[equation 43]

$$x\big([t_{i1}, t_{i2}], x_{i1}\big) \quad (i = 1, 2, \ldots ; q)$$

is given. Here,:

[equation 44]

$$t_{i1} < t_{i2}$$

holds. We obtain the solution of (5):

[equation 55]

$$Y \in \mathbf{R}^{n \times n}$$

under this condition.

The solution to Problem 2 is given as follows. We consider the state trajectory x in (4) from the initial state x(0) .

[equation 56]

$$x^\top(t)(YA + A^\top Y)x(t) = -x^\top(t)Qx(t) \qquad (6)$$

is obtained by making a quadratic form of x(t) with respect to both sides of (5). Furthermore,:

[equation 57]

$$\int_{t_1}^{t_2} x^\top(t)(YA + A^\top Y)x(t)dt = -\int_{t_1}^{t_2} x^\top(t)Qx(t)dt \qquad (7)$$

is obtained by integrating both sides of this equation over the time interval as below.

[equation 41]

$$[t_1, t_2]$$

The left side of (7) is equal to:

[equation 58]

$$x^\top(t_2)Yx(t_2) - x^\top(t_1)Yx(t_1)$$

because:

[equation 59]

$$x^\top(t)(YA + A^\top Y)x(t) = x^\top(t)YA + A^\top Yx(t)$$
$$= x^\top(t)Y\dot{x}(t) + \dot{x}^\top(t)Yx(t) = \frac{d}{dt}(x^\top(t)Px(t)) \qquad (8)$$

holds from (4). From the above, (7) can be expressed as below.

[equation 60]

$$x^\top(t_2)Yx(t_2) - x^\top(t_1)Yx(t_1) = -\int_{t_1}^{t_2} x^\top(t)Qx(t)dt \qquad (9)$$

The following q equations are obtained by applying the sets of data in Problem 2 to (9).

[equation 61]

$$x^\top(t_{i2}, t_{i1}, x_{i1})Yx(t_{i2}, t_{i1}, x_{i1}) - x_{i1}^\top Yx_{i1}$$
$$= -\int_{t_{i1}}^{t_{i2}} x^\top(t, t_{i1}, x_{i1})Qx(t, t_{i1}, x_{i1})dt$$
$$(i = 1, 2, \ldots, q) \qquad (10)$$

Here, (10) can be considered to be a linear equation for an unknown matrix Y because:

[equation 62]

$$x(t_{i2}, t_{i1}, x_{i1}), \ x_{i1}$$

and the right side are known constants. In the standard form, (10) is expressed as follows.
[equation 63]

$$D_1 \mathrm{rvec}(Y) = d_1 \qquad\qquad (11)$$

Here,:

[equation 64]

$$\mathrm{rvec}(Y) \in \mathbf{R}^{(1/2)n(n+1)}$$

are unknown variables. Also,:

[equation 234]

$$D_1 \in \mathbf{R}^{q \times (1/2)n(n+1)}$$

is the matrix given by the following.

[equation 65]

$$D_1 := \begin{bmatrix} \mathrm{lvec}(x(t_{12}, t_{11}, x_{11})) - \mathrm{lvec}(x_{11}) \\ \mathrm{lvec}(x(t_{22}, t_{21}, x_{21})) - \mathrm{lvec}(x_{21}) \\ \vdots \\ \mathrm{lvec}(x(t_{q2}, t_{q1}, x_{q1})) - \mathrm{lvec}(x_{q1}) \end{bmatrix}$$

[equation 66]

$$d_1 \in \mathbf{R}^{(1/2)n(n+1)}$$

is a vector formed by arranging the values on the right side of (10) with respect to the following.

[equation 67]

$$i = 1, 2, \ldots, q$$

The solution to Problem 2 is thus obtained as follows.

(Lemma 2)

We consider Problem 2. If:
[equation 68]

$$\mathrm{rank}(D_1) = \frac{1}{2}n(n+1) \qquad (12)$$

holds, there exists a unique solution Y to (10), which is equal to the solution of Problem 2 (End of Lemma 2).
Lemma 2 shows that the solution to Problem 2 can be obtained by solving the linear equation (10), namely (11), using a set of state orbit data for the system shown in (4).

[Estimation of controllability Gramians].

The solution of Problem 1(i) is described below.

[Data Transformation]

According to the aforementioned Lemma 1, Problem 1(i) comes down to solving the Lyapunov equation (3) by a data-driven method. Below, we obtain the solution of (3) based on data using the same method that yielded (10). Similar to (6), we make the quadratic form of the state x(t) when B = 0 on the left side of (3) and (1).

[equation 69]

$$x^\top(t)(XA^\top + AX)x(t) = x^\top(t)XA^\top x(t) + x^\top(t)AXx(t)$$

However, in this case, unlike in (8), we cannot replace:

[equation 70]

$$A^\top x(t)$$

and:

[equation 71]

$$x^\top(t)A$$

by:

[equation 72]

$$\dot{x}(t) \; ,$$

, in general. This is because x(t) is a state of (1) and:

[equation 73]

$$\dot{x}(t) \neq A^\top x(t)$$

holds, in general.

Therefore first, we introduce the following system defined by the transpose matrix of matrix A:

[equation 74]

$$\dot{z}(t) = A^\top z(t) \qquad (13)$$

where:

[equation 75]

$$z(t) \in \mathbf{R}^n$$

is the state. In this system, we use the symbol:

[equation 77]

$$z(t, t_1, z_1)$$

to express the state:

[equation 143]

$$z(t)$$

when:

[equation 76]

$$z(t_1) = z_1 \in \mathbf{R}^n$$

holds.

Here, we make the quadratic form:

[equation 78]

$$z^\top(t)(XA^\top + AX)z(t)$$

which satisfies the following.

[equation 79]

$$z^\top(t)(XA^\top + AX)z(t) = z^\top(t)XA^\top z(t) + z^\top(t)AX z(t)$$

$$= z^\top(t)X\dot{z}(t) + \dot{z}^\top(t)Xz(t) = \frac{d}{dt}z^\top(t)Xz(t) \qquad (14)$$

On the other hand,:

[equation 80]

$$\int_{t_1}^{t_2} z^\top(t)(XA^\top + AX)z(t)dt = -\int_{t_1}^{t_2} z^\top(t)BB^\top z(t)dt \qquad (15)$$

holds by (3).

Therefore, we obtain:

[equation 81]

$$z^\top(t_2)Xz(t_2) - z^\top(t_1)Xz(t_1) = -\int_{t_1}^{t_2} z^\top(t)BB^\top z(t)dt \qquad (16)$$

by (14) and (15). This has the same form as (19).

However, in this case, the set of data for the state trajectory in (13) in Problem 1 is not obtained. This difficulty can be resolved by the following result.

(Lemma 3)

We consider:

[equation 43]

$$x([t_{i1}, t_{i2}], x_{i1}) \quad (i = 1, 2, \ldots; q)$$

in Problem 1. We assume:

[equation 82]

$$q \geq n$$

holds and choose n arbitrary data from the set of data. Here, n is the dimension of:

[equation 142]

$$x(t)$$

in (1).

It can be considered that the chosen data are:

[equation 83]

$$x\left([t_{i1}, t_{i2}], x_{i1}\right) \quad (i = 1, 2, \ldots, n)$$

without loss of generality. We assume the following.
[equation 84]

$$E(t) := [x(t + t_{11}, t_{11}, x_{11}) \ \ x(t + t_{21}, t_{21}, x_{21}) \ \cdots \ x(t + t_{n1}, t_{n1}, x_{n1})] \qquad (17)$$

[equation 85]

$$E_0 := [x_{11} \ \ x_{21} \ \cdots \ x_{n1}] \qquad (18)$$

If:

[equation 86]

$$E_0$$

is regular,:

[equation 89]

$$z(t + t_{i1}, t_{i1}, x_{i1}) = \left(E(t)E_0^{-1}\right)^\top x_{i1}$$

holds with respect to the following.

[equation 87]

$$i \in \{1, 2, \ldots, q\}$$

[equation 88]

$$t \in [0, h]$$

Here,:

[equation 90]

$$h := \min_{i \in \{1,2,\ldots,q\}} (t_{i2} - t_{i1})$$

holds (End of Lemma 3).

(Proof)

We consider data points:

[equation 92]

$$x_{i1}$$

and state trajectory:

[equation 93]

$$x([t_{j1}, t_{j2}], x_{j1})$$

with respect to the following which are given.

[equation 87]

$$i \in \{1, 2, \ldots, q\}$$

[equation 91]

$$j \in \{1, 2, \ldots, n\}$$

The product of:

[equation 95]

$$x^\top(t + t_{j1}, t_{j1}, x_{j1})$$

and:

[equation 92]

$$x_{i1}$$

for any:

[equation 94]

$$t \in [0, t_{j2} - t_{j1}]$$

is given by the following.

[equation 96]

$$x^\top(t + t_{j1}, t_{j1}, x_{j1})x_{i1} = (e^{At}x_{j1})^\top x_{i1} = x_{j1}^\top e^{A^\top t}x_{i1}$$
$$= x_{j1}^\top z(t + t_{i1}, t_{i1}, x_{i1})$$

By obtaining this relation for j = 1, 2, ..., n, the following is obtained for t.

[equation 97]

$$E^\top(t)x_{i1} = E_0^\top z(t + t_{i1}, t_{i1}, x_{i1})$$

[equation 88]

$$t \in [0, h]$$

This means that:

[equation 89]

$$z(t + t_{i1}, t_{i1}, x_{i1}) = (E(t)E_0^{-1})^\top x_{i1}$$

holds if:

[equation 86]

$$E_0$$

is regular (End of proof).

We can transform the set of data in Problem 1 into the set of data in the state trajectory in (13) by this lemma. Note that the assumption of:

[equation 82]

$$q \geq n$$

is not restrictive. This is because the number of data can be increased by dividing the state trajectory into multiple segments.

[Data-driven estimation]

The linear equation:
[equation 84]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})] \qquad (17)$$

is obtained by (16), (19) and the following.

[equation 83]

$$x([t_{i1}, t_{i2}], x_{i1}) \quad (i = 1, 2, \ldots, n)$$

This is expressed as:
[equation 102]

$$D_2 \mathrm{rvec}(X) = d_2 \qquad (21)$$

with respect to:

[equation 101]

$$d_2 \in \mathbf{R}^{(1/2)n(n+1)}$$

and the following vector.

[equation 100]

$$D_2 := \begin{bmatrix} \mathrm{lvec}((E(h)E_0^{-1})^\top x_{11}) - \mathrm{lvec}(x_{11}) \\ \mathrm{lvec}((E(h)E_0^{-1})^\top x_{21}) - \mathrm{lvec}(x_{21}) \\ \vdots \\ \mathrm{lvec}((E(h)E_0^{-1})^\top x_{q1}) - \mathrm{lvec}(x_{q1}) \end{bmatrix}$$

As a result, the solution to Problem 1 is obtained as follows.

(Theorem 1)

We consider Problem 1(i). We assume the following.

[equation 82]

$$q \geq n$$

If:
[equation 103]

$$\mathrm{rank}(D_2) = \frac{1}{2}n(n+1) \qquad (22)$$

holds, there exists a unique solution X to (20), which is equal to the solution of Problem 1 (End of Theorem 1).
According to Theorem 1, the solution of Problem 1(i) is given as the solution of the linear equation (20).
In the above discussion, it was assumed that the set of data obtained is a continuous-time signal and contains no noise. However, this is not limited to this, and as shown below, the aforementioned results can also be applied to data containing noise.
We assume that data:

[equation 43]

$$x([t_{i1}, t_{i2}], x_{i1}) \qquad (i = 1, 2, \ldots ; q)$$

is assumed to contain noise. In order to suppress the effect of noise, it is preferable to use more data to create the matrix:

[equation 145]

$$E(t)$$

and:

[equation 86]

$$E_0$$

in Lemma 3. Therefore,:

[equation 105]

$$E(t) \in \mathbf{R}^{n \times p}$$

[equation 106]

$$E_0 \in \mathbf{R}^{n \times p}$$

are obtained with respect to:

[equation 104]

$$p \leq q$$

. Then, from (19) and the properties of the Moore-Penrose pseudo-inverse, the relationship:

[equation 107]

$$z\big(t + t_{i1}, t_{i1}, x_{i1}\big) \simeq \big(E(t)E_0^+\big)^\top x_{i1}$$

is obtained. As a result, an approximate solution to Problem 1(i) is obtained from a variant of (20):
[equation 108]

$$x_{i1}^\top (E(h)E_0^+) X (E(h)E_0^+)^\top x_{i1} - x_{i1}^\top X x_{i1}$$
$$= - \int_0^h x_{i1}^\top (E(t)E_0^+) B B^\top (E(t)E_0^+)^\top x_{i1} dt$$
$$(i = 1, 2, \ldots, p) \qquad (23)$$

Here,:

[equation 145]

$$E(t)$$

and:

$$[\text{equation } 86]$$

$$E_0$$

are defined with respect to the p data and the following.

$$[\text{equation } 109]$$

$$h \;:=\; \min_{i \in \{1,2,\ldots,p\}} \left(t_{i2} - t_{i1}\right)$$

Next, we assume that the sets of data are given as acyclic sample data of state orbitals. The left side of (20) consists of the endpoints of each state trajectory and can be computed from the sample data of the state trajectories. In contrast, the right side of (20) is the integral of the quadratic form of the state orbit. This can be computed approximately from sample data, for example, using the trapezoidal formula. By applying these principles, an approximate solution to the above problem can be obtained.

[Maximizing Controllability Gramians]

The solution of Problem 1(ii) is described below.

[Characterization of input matrices]

The following shows the maximization of the controllability Gramian:

$$[\text{equation } 140]$$

$$G(\infty)$$

for the input matrix B.

(Lemma 4)

For the system shown in (1), we assume that matrix A is a Hurwitz matrix. We consider the following maximization problem:

[equation 110]

$$\begin{cases} \max\limits_{B \in \mathbf{B}} \; \mathrm{tr}(G(\infty)) \\ \mathrm{s.t.} \; \|B\|_F \leq 1 \end{cases} \qquad (24)$$

where:

[equation 47]

$$\mathbf{B} \subset \bigcup_{m=1}^{\infty} \mathbf{R}^{n \times m}$$

is a given pair of possible input matrices.

We define Y* as follows.

[equation 111]

$$Y^* := \int_0^\infty e^{A^\top \tau} e^{A\tau} d\tau \qquad (25) \quad ,$$

which is finite positive definite since matrix A is a Hurwitz matrix. The following proposition holds.

(i) We define the unit eigenvector:

[equation 113]

$$B_1^* \in \mathbf{R}^n$$

with respect to the following largest eigenvalue.

[equation 112]

$$Y^*$$

The matrix:

[equation 114]

$$B_1^*$$

is the slution of (24) for:

[equation 47]

$$\mathbf{B} \subset \bigcup_{m=1}^{\infty} \mathbf{R}^{n \times m}$$

and

[equation 115]

$$\mathrm{tr}(G(\infty)) = \lambda_{max}(Y^*)\mathrm{tr}(B_1^*(B_1^*)^\top) \qquad (26)$$

holds.

(ii) We assume that:

[equation 116]

$$B_2^* \in \mathbf{R}^{n \times n}$$

is a diagonal matrix of which (k, k) component is 1 and the other components are 0. Here:

[equation 117]

$$k \in \{1, 2, \ldots, n\}$$

is the row number, also the column number, when the diagonal component of the following matrix.

[equation 112]

$$Y^*$$

[equation 118]

$$B_2^*$$

is the slution of (24) for:

[equation 49]

$$\mathbf{B} = \mathbf{D}_n$$

and is

[equation 119]

$$\mathrm{tr}(G(\infty)) = \max_{i \in \{1, 2, \ldots, n\}} y_i \ (= y_k) \qquad (27)$$

holds. Here,:

[equation 120]

$$y_i \in \mathbf{R}$$

is the i-th diagonal component of the following.

[equation 112]

$$Y^*$$

(End of Lemma4)

(Proof)

(i) See, e.g., Non-Patent Document 10.
(ii) We define the i-th diagonal component of matrix B as the following.

[equation 121]

$$b_i \in \mathbf{R}$$

[equation 122]

$$
\begin{aligned}
\mathrm{tr}(G(\infty)) &= \mathrm{tr}\left(\int_0^\infty e^{A\tau} B B^\top e^{A^\top \tau} d\tau\right) \\
&= \int_0^\infty \mathrm{tr}(e^{A\tau} B B^\top e^{A^\top \tau}) d\tau = \int_0^\infty \mathrm{tr}(e^{A^\top \tau} e^{A\tau} B B^\top) d\tau \\
&= \mathrm{tr}\left(\int_0^\infty e^{A^\top \tau} e^{A\tau} B B^\top d\tau\right) = \mathrm{tr}\left(\int_0^\infty e^{A^\top \tau} e^{A\tau} d\tau B B^\top\right)
\end{aligned}
\tag{28}
$$

is obtained from (2) and the properties of the trace. For any:

[equation 123]

$$B \in \mathbf{D}_n$$

:

[equation 124]

$$BB^\top$$

is a diagonal matrix. Therefore, from (28),:
[equation 126]

$$\mathrm{tr}(G(\infty)) = \mathrm{tr}\left(\int_0^\infty e^{A^\top \tau} e^{A\tau} d\tau BB^\top\right) = \sum_{i=1}^n y_i b_i^2$$
$$\leq \max_{i \in \{1,2,\ldots,n\}} y_i \qquad (29)$$

holds, for any:

[equation 123]

$$B \in \mathbf{D}_n$$

which satisfies:

[equation 45]

$$\|B\|_F \leq 1 \;,$$

i.e.,:

[equation 125]

$$\|[b_1 \;\; b_2 \;\; \cdots \;\; b_n]\|_2 \leq 1 \;\;.$$

. On the other hand, from the definitions of (29) and:

[equation 118]

$$B_2^* \;\;,$$

(27) holds for:

[equation 118]

$$B_2^*.$$

. Further,:

[equation 127]

$$\|B_2^*\|_F = 1$$

holds (End of proof).

[Data-driven maximization problem]

Lemma 4 means that, the input matrix that maximizes:

[equation 141]

$$\mathrm{tr}\big(G(\infty)\big)$$

is characterized by:

[equation 112]

$$Y^*$$

in (25). On the other hand,:

[equation 112]

$$Y^*$$

is equal to the unique solution of the Lyapunov equation (5) for:

[equation 7]

$$Q := I.$$

Therefore, from Lemma 2 and Lemma 4, the following holds.

(Theorem 2)

We consider Problem 1(ii). We assume that (12) hold with respect to the set of data given in Problem 1. We assume that:

[equation 9]

$$\tilde{Y}^*$$

is the solution to:
[equation 61]

$$x^\top(t_{i2}, t_{i1}, x_{i1})Y x(t_{i2}, t_{i1}, x_{i1}) - x_{i1}^\top Y x_{i1}$$
$$= -\int_{t_{i1}}^{t_{i2}} x^\top(t, t_{i1}, x_{i1})Q x(t, t_{i1}, x_{i1})dt$$
$$(i = 1, 2, \ldots, q) \qquad (10)$$

with respect to:

[equation 7]

$$Q := I \cdot$$

Furthermore, in Lemma 4, we assume that:

[equation 11]

$$\tilde{B}_1^*$$

and:

[equation 112]

$$Y^*$$

are the input matrices with respect to:

[equation 9]

$$\tilde{Y}*$$

as we defined:

[equation 118]

$$B_2^*$$

with respect to:

[equation 114]

$$B_1^*$$

and:

[equation 118]

$$B_2^* \quad \cdot$$

In this case, the following proposition holds.

(i) The input matrix:

[equation 11]

$$\tilde{B}_1^*$$

is the solution of Problem 1(ii) with respect to the following:

[equation 47]

$$\mathbf{B} \subset \bigcup_{m=1}^{\infty} \mathbf{R}^{n \times m}$$

(ii) The input matrix:

[equation 12]

$$\tilde{B}_2^*$$

is the solution of Problem 1(ii) with respect to the following:

[equation 49]

$$\mathbf{B} = \mathbf{D}_n$$

(End of Theorem 2).

Theorem 2 shows that the solution of Problem 1(ii) can be obtained by solving the linear equation (10) and forming the input matrix by the method of Lemma 4.

The first embodiment

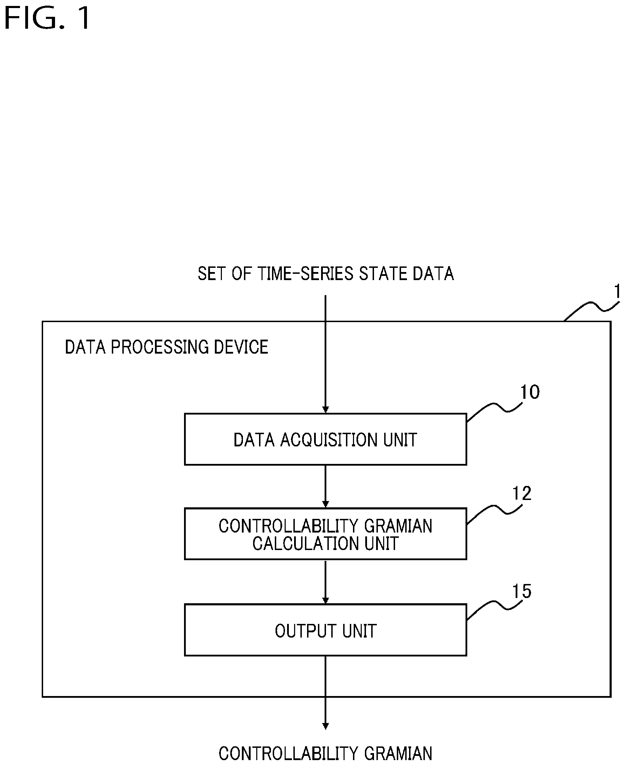

Figure 1 is a functional block diagram of a data processing device 1 according to the first embodiment. The data processing device 1 comprises a data acquisition unit 10, a controllability Gramian calculation unit 12 and an output unit 15. The data processing device 1 estimates the limit:

[equation 140]

$$G(\infty)$$

of the controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\ddot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

The data acquisition unit 10 acquires a set of time-series state data in a plurality of time intervals. In the following description, the data acquisition unit 10 acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals.

[equation 4]

$$[t_{i1}, t_{i2}] \quad (i = 1, 2, \ldots, q)$$

The controllability Gramian calculation unit 12 defines:

[equation 75]

$$z(t) \in \mathbf{R}^n$$

expressed as:

[equation 74]

$$\dot{z}(t) = A^\top z(t) \qquad (13)$$

based on the sets of state data:

[equation 145]

$$E(t)$$

acquired by the data acquisition unit 10, calculates:

[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = \left(E(t)E_0^{-1}\right)^\top x_{i1}$$

and estimates:

[equation 146]

$$G(\infty) = X$$

by numerically obtaining the solution X of the following linear equation.

[equation 6]

$$x_{i1}^\top \left( E(h) E_0^{-1} \right) X \left( E(h) E_0^{-1} \right)^\top x_{i1} - x_{i1}^\top X x_{i1}$$

$$= - \int_0^h x_{i1}^\top \left( E(t) E_0^{-1} \right) B B^\top \left( E(t) E_0^{-1} \right)^\top x_{i1} dt$$

$$(i = 1, 2, \ldots, q)$$

The output unit 15 outputs the controllability Gramian estimated by the controllability Gramian calculation unit 12.
Here, the control objects are, for example, the following.

(Example 1) Power system. The time series data include the amount of electricity generated, the amount of electricity used, temperature and humidity, etc. at each power plant.
(Example 2) Robots. Time-series data include load, posture, external force and motion state, etc.
(Example 3) Human body. Time-series data include blood pressure, pulse rate, body temperature and blood composition, etc.
(Example 4) Chemical plant. Time-series data include temperature, humidity, atmospheric pressure and amount of dust in the air, etc.
(Example 5) Equipment to be maintained. Time-series data include failure alarm frequency, electrical resistance, metal fatigue and heat generation, etc.

These control objects are configured as network systems. The mathematical model describing the time-series data output from these systems are complex, and generally such a mathematical model itself is unknown. In contrast, by estimating and outputting controllability Gramians using this implementation, it is possible to determine which node of the control objects configured as network systems should be controlled as the input channel, while the mathematical model is still unknown. The above features are also common to all of the following forms.
According to this embodiment, the controllability Gramian can be estimated using a data-driven method based on a set of acquired continuous-driven state data for a system of which mathematical model is unknown.

The second embodiment

The set of time-series state data acquired by the data acquisition unit may include noise. In this case, the controllability Gramian calculation unit 12 estimates:

[equation 146]

$$G(\infty) = X$$

by computing an approximate solution to Problem 1(i) from:
[equation 108]

$$x_{i1}^\top \left( E(h) E_0^+ \right) X \left( E(h) E_0^+ \right)^\top x_{i1} - x_{i1}^\top X x_{i1}$$

$$= - \int_0^h x_{i1}^\top \left( E(t) E_0^+ \right) B B^\top \left( E(t) E_0^+ \right)^\top x_{i1} dt$$

$$(i = 1, 2, \ldots, p) \qquad (23)$$

instead of (20). Here,:

[equation 145]

$$E(t)$$

and:

[equation 86]

$$E_0$$

are defined with respect to the p data and the following.

[equation 109]

$$h \quad := \quad \min_{i \in \{1,2,...,p\}} (t_{i2} - t_{i1})$$

According to this embodiment, controllability Gramians can be estimated using a data-driven method even when the state data contains noise.

The third embodiment

When the state data contains noise, knowledge about the signs of some or all of the matrix components of the solution X of (23) may be given as prior knowledge. In this case, the controllability Gramian calculation unit 12 performs numerical calculations using such prior knowledge.

According to this method, controllability Gramians can be estimated more accurately using a data-driven method, even when the state data contains noise.

The fourth embodiment

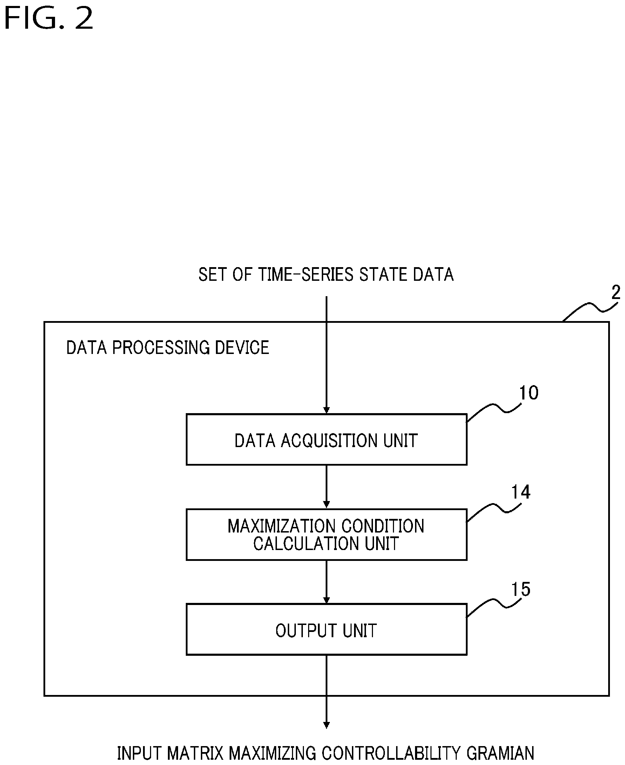

Figure 2 shows a functional block diagram of a data processing device 1 according to the fourth embodiment. The data processing device 2 comprises a data acquisition unit 10, a maximization condition calculation unit 14, and an output unit 15. The data processing device 2 estimates the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = A x(t) + B u(t)$$

holds, where:

[equation 142]

$$x(t)$$

is an n-dimensional vector representing the state of the control object,:

[equation 139]

$$u\left(t\right)$$

is an m-dimensional vector representing the control input, A is an unknown n x n matrix and B is a known n x m matrix.

The data acquisition unit 10 acquires sets of time-series state data in a plurality of time intervals. In the following description, the data acquisition unit 10 acquires a set of time-series state data:

[equation 5]

$$x([t_{11}, t_{12}], x_{11}), \; x([t_{21}, t_{22}], x_{11}), \; \cdots, \; x([t_{q1}, t_{q2}], x_{q1})$$

for the following q time intervals.

[equation 4]

$$[t_{i1}, t_{i2}] \quad (i \; = 1, 2, \ldots, q)$$

The maximization condition calculation unit 14 estimates the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^{\top}(t_{i2}, t_{i1}, x_{i1}) Y x(t_{i2}, t_{i1}, x_{i1}) - x_{i1}^{\top} Y x_{i1}$$

$$= - \int_{t_{i1}}^{t_{i2}} x^{\top}(t, t_{i1}, x_{i1}) Q x(t, t_{i1}, x_{i1}) dt$$

$$(i = 1, 2, \ldots, q)$$

based on the sets of state data:

[equation 5]

$$x([t_{11}, t_{12}], x_{11}), x([t_{21}, t_{22}], x_{11}), \cdots, x([t_{q1}, t_{q2}], x_{q1})$$

acquired by the data acquisition unit 10.

The output unit 15 outputs the input matrix when the controllability Gramian is maximized based on the maximization condition estimated by the maximization condition calculation unit 14.

According to this embodiment, for a system of which mathematical model is unknown, the input matrix when the controllability Gramian is maximized can be estimated using a data-driven method based on a set of acquired continuous-time state data.

The fifth embodiment

In the fifth embodiment, the maximization condition calculation unit 14 obtains a first input matrix:

[equation 11]

$$\tilde{B}_1^*$$

by calculating the unit eigenvector corresponding to the maximum eigenvalue of:

[equation 9]

$$\tilde{Y}^*$$

when:

[equation 47]

$$\mathbf{B} \subset \bigcup_{m=1}^{\infty} \mathbf{R}^{n \times m}$$

holds.

According to this embodiment, effective input matrix can be obtained when:

[equation 47]

$$\mathbf{B} \subset \bigcup_{m=1}^{\infty} \mathbf{R}^{n \times m}$$

holds.

The sixth embodiment

In the sixth embodiment, the maximization condition calculation unit obtains a second input matrix:

[equation 12]

$$\tilde{B}_2^*$$

by calculating the n × n matrix in which the (k, k) component is 1 and the other components are 0, where the (k, k) component is the one that is the maximum among the diagonal components of:

[equation 9]

$$\tilde{Y}^* \;,$$

when:

[equation 49]

$$\mathbf{B} = \mathbf{D}_n$$

holds.

According to this embodiment, effective input matrix can be obtained when:

[equation 49]

$$\mathbf{B} = \mathbf{D}_n$$

holds.

The seventh embodiment (1)

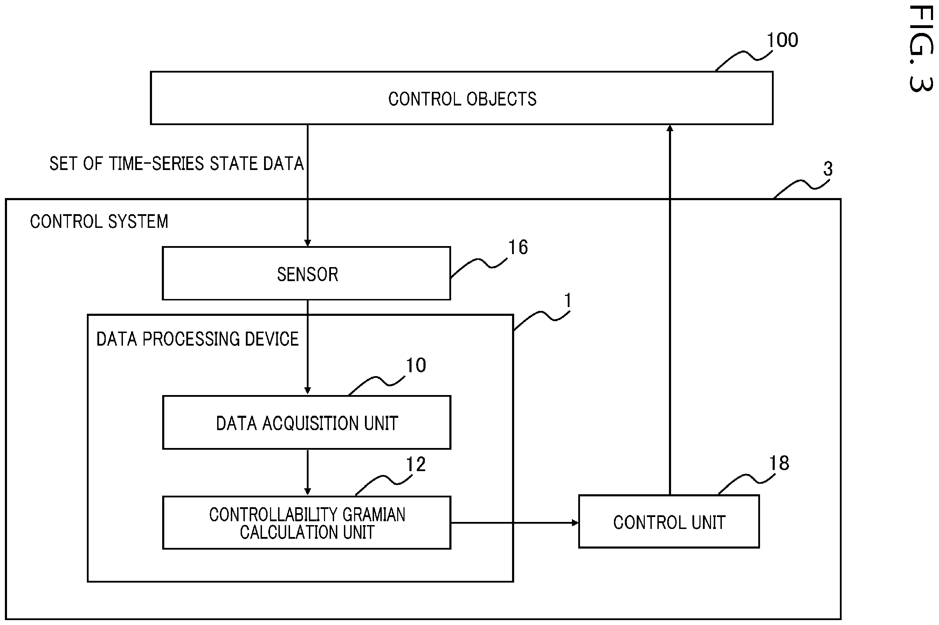

Figure 3 shows a functional block diagram of the control system 3 according to the seventh embodiment. The control system 3 comprises a sensor 16, a data processing device 1 and a control unit 18. The data processing device 1 comprises a data acquisition unit 10 and a controllability Gramian calculation unit 12. Namely, the data processing device 1 is configured and operates the same as the data processing device 1 in Figure 1. The control system 3 controls external control objects 100 by inputting control signals to the control objects 100.

The sensor 16 detects a set of time-series state data from the control objects 100. The sensor 16 then transmits the detected set of state data to the data acquisition unit 10 of the data processing device 1. The data processing device 1 estimates:

[equation 146]

$$G(\infty) = X$$

and transmits it to the control unit 18. The control unit 18 generates control signals based on:

[equation 146]

$$G(\infty) = X$$

and controls the control objects 100 using them.

According to this embodiment, it is possible to detect time-series state data from an external control object, to estimate the controllability Gramian using a data-driven method based on the detected set of state data and appropriately to control said control object based on the estimated controllability Gramian.

The seventh embodiment (2)

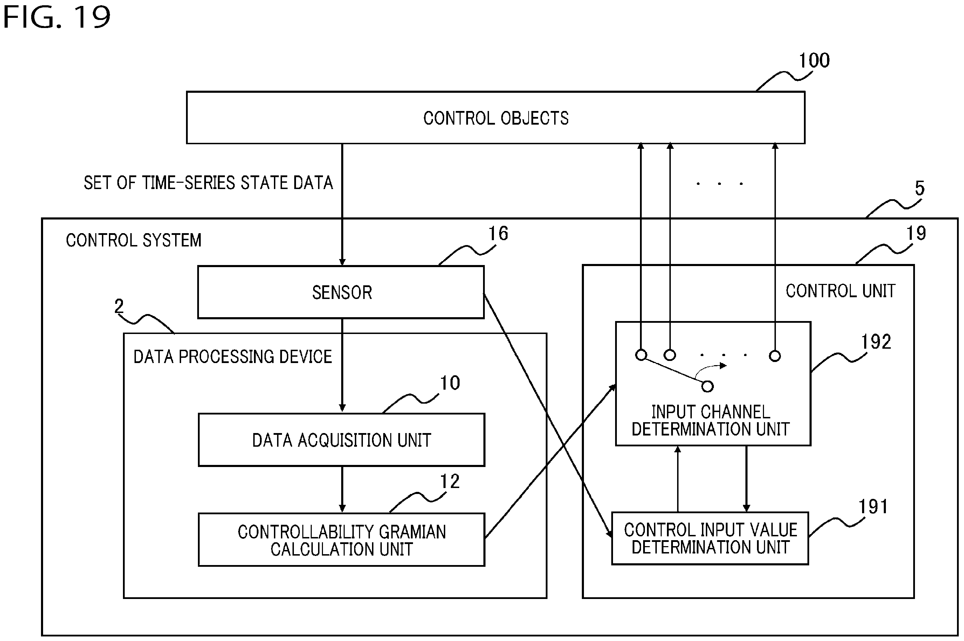

Figure 19 is a functional block diagram of the control system 5 according to a variant of the seventh embodiment. Control system 5 comprises a sensor 16, data processing device 1 and a control unit 19. The data processing device 1 comprises a data acquisition unit 10 and a controllability Gramian calculation unit 12. The control unit 19 has a control input value determination unit 191 and an input channel determination unit 192. Namely, the control system 5 differs from the control system 3 in Figure 3 in that the control unit 19 includes the control input value determination unit 191 and the input channel determination unit 192. Other configurations of the control system 5 are common to the control system 3. In the following, we will focus on the parts that differ from the control system 3 and omit redundant explanations.

The control input value determination unit 191 is sent the set of state data detected by the sensor 16. Based on this set of state data, the control input value determination unit 191 determines what control should be performed on the control object determined by the input channel determination unit 192. The control input value determination unit 191 sends the determined control contents to the input channel determination unit 192.

The input channel determination unit 192 is sent the estimated controllability Gramian. The input channel determination unit 192 determines which of the control objects 100 should be controlled based on this controllability Gramian. The input channel determination unit 192 selects the determined control object and executes the control determined by the control input value determination unit 191 on the selected control object.

According to this embodiment, it is possible to detect time-series state data from external control objects, to estimate controllability Gramians using a data-driven method based on a set of detected state data, to select an appropriate control object based on the estimated controllability Gramians and appropriately to control the selected control object.

The eighth embodiment

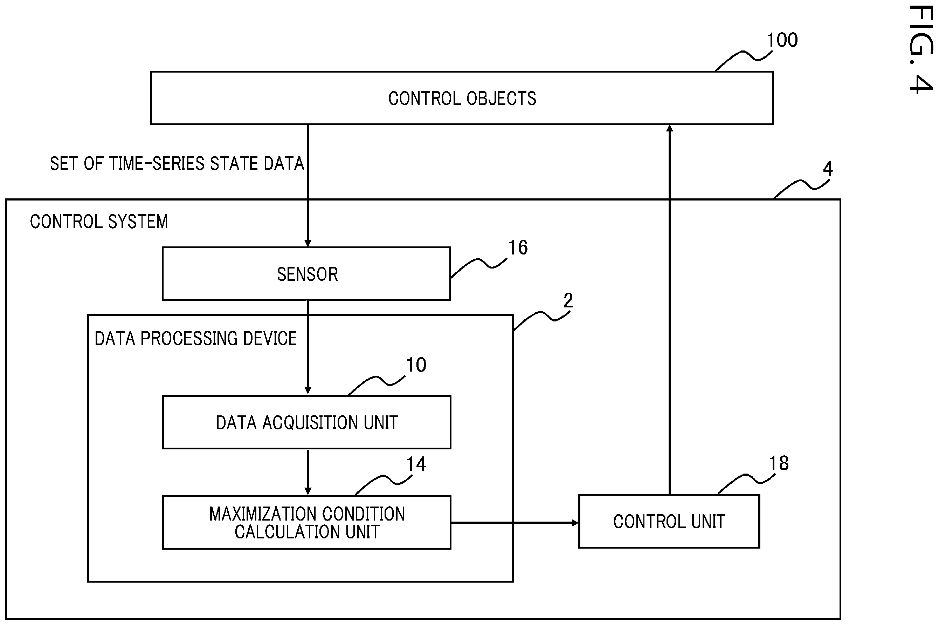

Figure 4 is a functional block diagram of the control system 4 according to the eighth embodiment. The control system 4 comprises a sensor 16, a data processing device 2 and a control unit 18. The data processing device 2 comprises a data acquisition unit 10 and a maximization condition calculation unit 14. Namely, the data processing device 2 is configured the same as the data processing unit 2 in Figure 2 and operates the same. The control system 4 controls external control objects 100 by inputting control signals to the control object 100.

The sensor 16 detects a set of time-series state data from the control objects 100. The sensor 16 transmits the detected set of state data to the data acquisition unit 10 of the data processing device 1. The data processing device 2 estimates the matrix B which maximizes:

[equation 141]

$$\mathrm{tr}\big(G(\infty)\big)$$

and sends it to the control unit 18. The control unit 18 generates control signals based on the matrix B and uses them to control the control objects 100.

According to this embodiment, it is possible to detect time-series state data from external control objects, to estimate the input matrix when the controllability Gramian is maximum using a data-driven method based on the detected set of state data, and appropriately to control the control objects based on the estimated input matrix.

The ninth embodiment

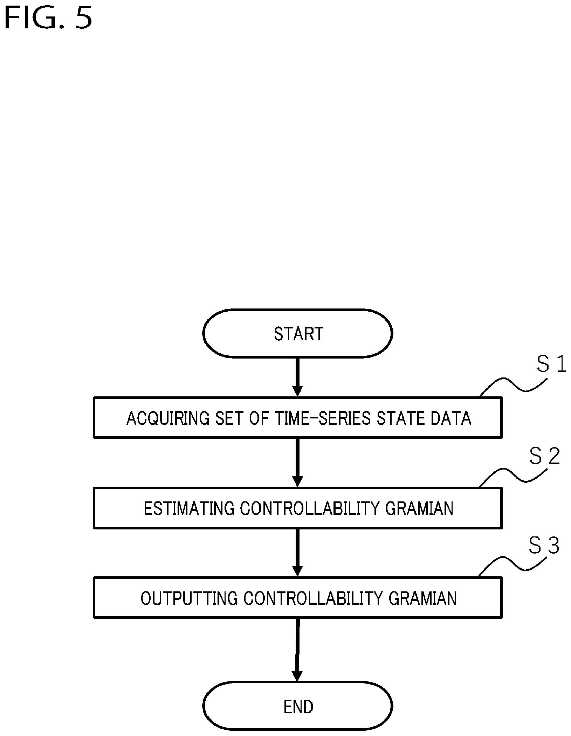

Figure 5 is a flowchart showing the processing procedure of the data processing method according to the ninth embodiment. This method estimates the limit:

[equation 140]

$$G\big(\infty\big)$$

of the controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

In step S1, the method obtains the time-series state data set:

[equation 5]

$$x([t_{11}, t_{12}], x_{11}), x([t_{21}, t_{22}], x_{11}), \cdots, x([t_{q1}, t_{q2}], x_{q1})$$

in the q time intervals:

[equation 4]

$$[t_{i1}, t_{i2}] \quad (i = 1, 2, \ldots, q)$$

when:

[equation 39]

$$u(t) \equiv 0$$

holds.

In step S2, the method defines:

[equation 75]

$$z(t) \in \mathbf{R}^n$$

expressed as:
[equation 74]

$$\dot{z}(t) = A^\top z(t) \qquad\qquad (13)$$ ,

calculates:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimates:

[equation 146]

$$G(\infty) = X$$

with respect to:

[equation 157]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})]$$

[equation 158]

$$E_0 := [x_{11} \quad x_{21} \quad \cdots \quad x_{n1}]$$

by numerically obtaining the solution X of the following linear equation.

[equation 6]

$$x_{i1}^\top (E(h)E_0^{-1})X(E(h)E_0^{-1})^\top x_{i1} - x_{i1}^\top X x_{i1}$$
$$= -\int_0^h x_{i1}^\top (E(t)E_0^{-1})BB^\top (E(t)E_0^{-1})^\top x_{i1}dt$$
$$(i = 1, 2, \ldots, q)$$

In step S3, the method outputs the controllability Gramian estimated in step S2.

According to this embodiment, the controllability Gramian can be estimated by a computer using a data-driven method based on a set of acquired continuous-time state data for a system of which mathematical model is unknown.

The tenth embodiment

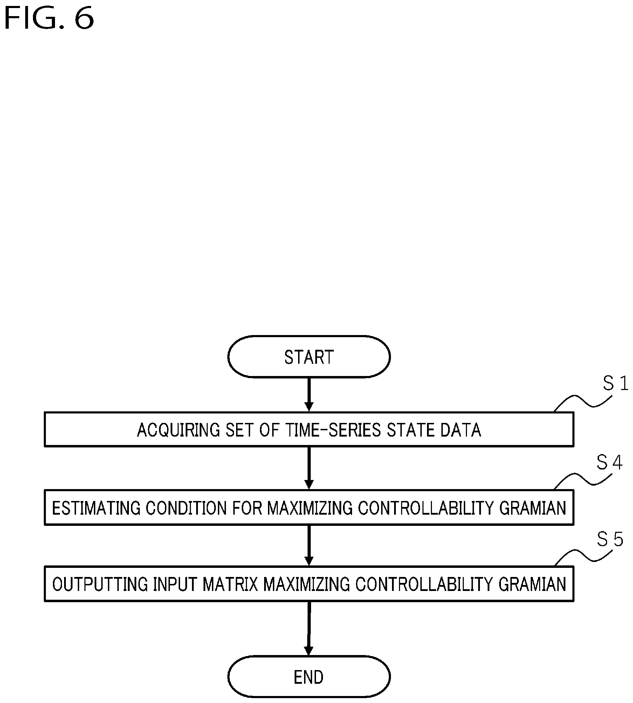

Figure 6 is a flowchart showing the processing procedure of the data processing method according to the tenth embodiment.

This method estimates the matrix B which maximizes the trace:

[equation 141]

$$\mathrm{tr}(G(\infty))$$

of the limit:

[equation 140]

$$G(\infty)$$

of the controllability Gramian:

[equation 138]

$$G(t)$$

defined by:

[equation 2]

$$G(t) := \int_0^t e^{A\tau}BB^\top e^{A^\top \tau}d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

In step S1, the method obtains the time-series state data set:

[equation 5]

$$x([t_{11}, t_{12}], x_{11}), x([t_{21}, t_{22}], x_{11}), \cdots, x([t_{q1}, t_{q2}], x_{q1})$$

in the q time intervals:

[equation 4]

$$[t_{i1}, t_{i2}] \quad (i = 1, 2, \ldots, q)$$

when:

[equation 39]

$$u(t) \equiv 0$$

holds.

In step S4, the method estimates the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^\top(t_{i2}, t_{i1}, x_{i1})Y x(t_{i2}, t_{i1}, x_{i1}) - x_{i1}^\top Y x_{i1}$$
$$= -\int_{t_{i1}}^{t_{i2}} x^\top(t, t_{i1}, x_{i1})Q x(t, t_{i1}, x_{i1})dt$$
$$(i = 1, 2, \ldots, q)$$

when:

[equation 7]

$$Q := I$$

holds.

In step S5, the method outputs the input matrix when the controllability Gramian is maximized based on the maximization condition estimated in step S4.

According to this embodiment, the input matrix when the controllability Gramian is maximized can be estimated by a computer using a data-driven method based on a set of acquired continuous-time state data for a system of which mathematical model is unknown.

The eleventh embodiment

The eleventh embodiment is a program. This program estimates the limit:

[equation 140]

$$G(\infty)$$

of the controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u\big(t\big)$$

is an m-dimensional vector representing the control input, A is an unknown n x n matrix and B is a known n x m matrix.

This program make a computer perform the step of obtaining the time-series state data set:

[equation 5]

$$x([t_{11}, t_{12}], x_{11}), x([t_{21}, t_{22}], x_{11}), \cdots, x([t_{q1}, t_{q2}], x_{q1})$$

in the q time intervals:

[equation 4]

$$[t_{i1}, t_{i2}] \quad (i = 1, 2, \ldots, q)$$

when:

[equation 39]

$$u\big(t\big) \equiv 0$$

holds,
the step of defining:

[equation 75]

$$z\big(t\big) \in \mathbf{R}^n$$

expressed as:
[equation 74]

$$\dot{z}(t) = A^\top z(t) \qquad (13) \qquad ,$$

calculating:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = \left(E(t)E_0^{-1}\right)^\top x_{i1}$$

and estimating:

[equation 146]

$$G(\infty) = X$$

by numerically obtaining the solution X of the following linear equation:

[equation 6]

$$x_{i1}^\top(E(h)E_0^{-1})X(E(h)E_0^{-1})^\top x_{i1} - x_{i1}^\top X x_{i1}$$

$$= -\int_0^h x_{i1}^\top(E(t)E_0^{-1})BB^\top(E(t)E_0^{-1})^\top x_{i1}dt$$

$$(i = 1, 2, \ldots, q)$$

with respect to:

[equation 157]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})]$$

[equation 158]

$$E_0 := [x_{11} \quad x_{21} \quad \cdots \quad x_{n1}]$$

and
the step of outputting the estimated controllability Gramian.

According to this embodiment, software can be implemented as a program to estimate the controllability Gramian using a data-driven method based on a set of acquired continuous-time state data for a system of which the mathematical model is unknown.

**EP 4 398 130 A1**

The twelfth embodiment

The twelfth embodiment is a program. This program estimates the matrix B which maximizes the trace:

[equation 141]

$$\mathrm{tr}(G(\infty))$$

of the limit:

[equation 140]

$$G(\infty)$$

of the controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

83

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

This program make a computer perform the step of obtaining the time-series state data set:

[equation 5]

$$x([t_{11}, t_{12}], x_{11}), x([t_{21}, t_{22}], x_{11}), \cdots, x([t_{q1}, t_{q2}], x_{q1})$$

in the q time intervals:

[equation 4]

$$[t_{i1}, t_{i2}] \quad (i = 1, 2, \ldots, q)$$

when:

[equation 39]

$$u(t) \equiv 0$$

holds,
the step of estimating the matrix B which maximizes:

[equation 141]

$$\mathrm{tr}(G(\infty))$$

by numerically obtaining the solution:

[equation 9]

$$\tilde{Y}^{*}$$

of the following linear equation:

[equation 8]

$$x^{\top}(t_{i2}, t_{i1}, x_{i1})Y x(t_{i2}, t_{i1}, x_{i1}) - x_{i1}^{\top} Y x_{i1}$$
$$= -\int_{t_{i1}}^{t_{i2}} x^{\top}(t, t_{i1}, x_{i1}) Q x(t, t_{i1}, x_{i1}) dt$$
$$(i = 1, 2, \ldots, q)$$

when:

[equation 7]

$$Q := I$$

holds and
the step of outputting the input matrix when the controllability Gramian is maximized based on the estimated maximization condition.

According to this embodiment, software can be implemented as a program to estimate the input matrix when the controllability Gramian is maximized by a computer using a data-driven method based on a set of acquired continuoustime state data for a system of which mathematical model is unknown.

[Verification 1]

The following shows the results by the first embodiment with respect to a set of noiseless time-series state data are presented. We obtain the solution of Problem 1(i) in the system shown in (1) when:

[equation 147]

$$n = 3$$

holds. Here, we assume that the following hold.

[equation 148]

$$A := \begin{bmatrix} 0 & 1 & 0 \\ -1 & -2 & 5 \\ 0 & 0 & -1 \end{bmatrix}$$

[equation 149]

$$B := \begin{bmatrix} 0 \\ 1 \\ 1 \end{bmatrix}$$

For comparison, the true values of controllability Gramians:

[equation 140]

$$G(\infty) \quad ,$$

, which is obtained using (3) and "lyap" of Matlab™, are as follows.

[equation 150]

$$G(\infty) = \begin{bmatrix} 6.813 & 0 & 0.875 \\ 0 & 2.438 & 0.875 \\ 0.875 & 0.875 & 0.500 \end{bmatrix}$$

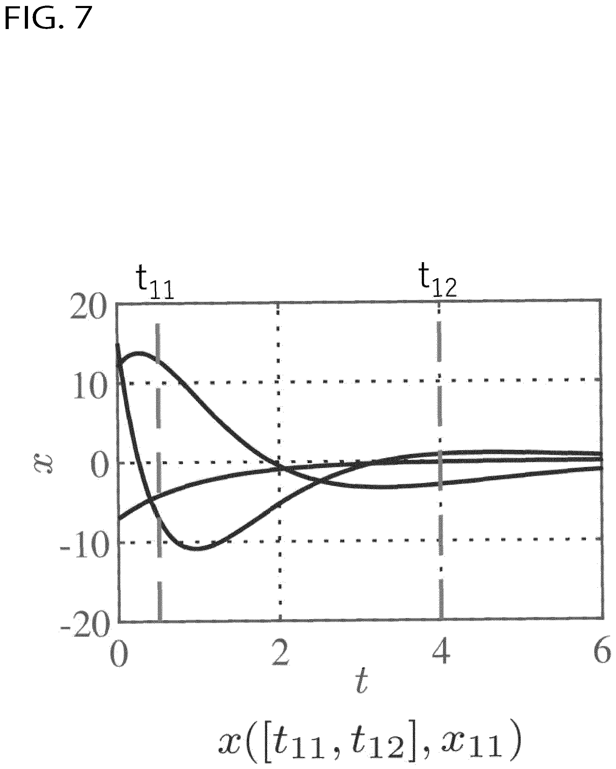

Figures 7 through 12 show the time-series data without noise. Specifically, Figure 7 shows the time-series data in the time interval:

[equation 151]

$$\left[ t_{11}, t_{12} \right]$$

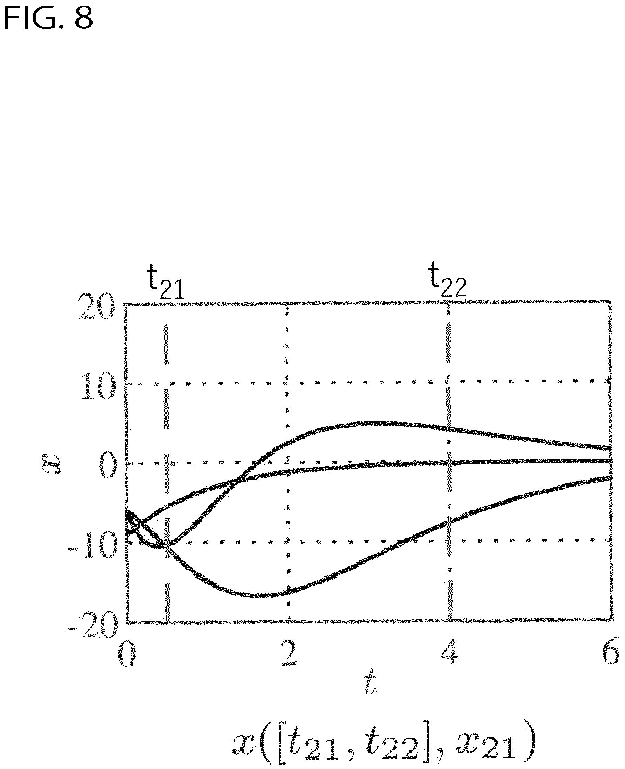

Figure 8 shows the time-series data in the time interval:

[equation 152]

$$[t_{21}, t_{22}]$$

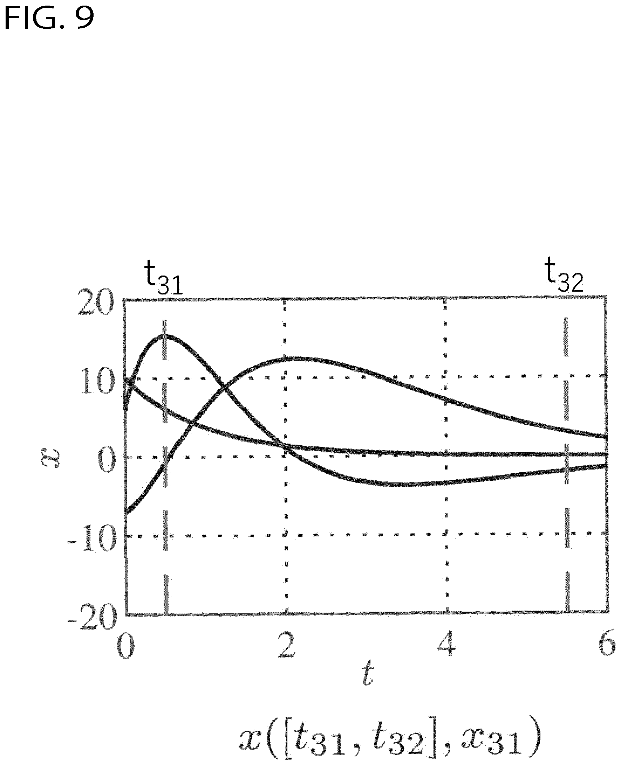

Figure 9 shows the time-series data in the time interval:

[equation 153]

$$[t_{31}, t_{32}]$$

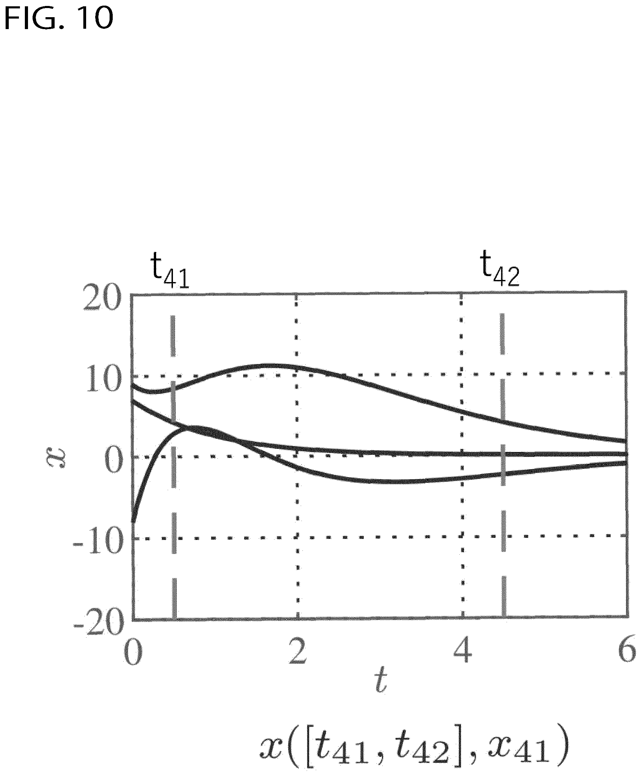

Figure 10 shows the time-series data in the time interval:

[equation 154]

$$[t_{41}, t_{42}]$$

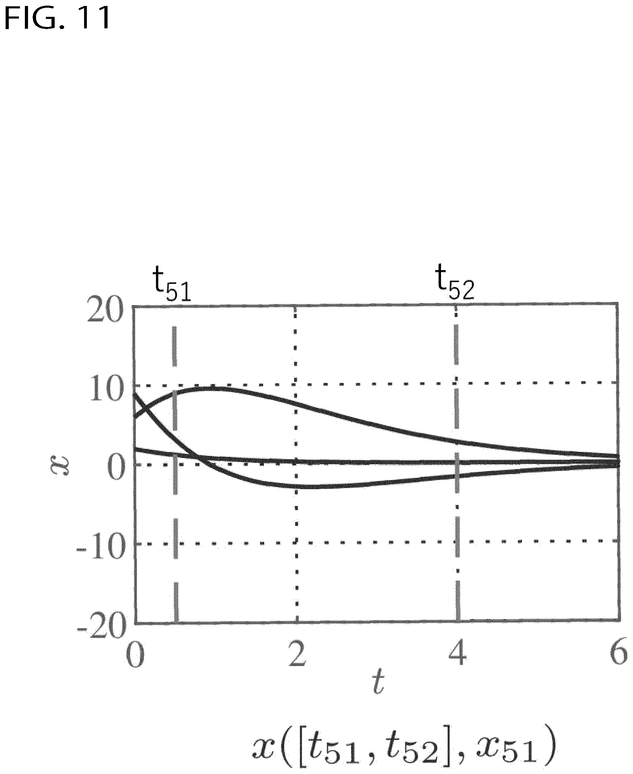

Figure 11 shows the time-series data in the time interval:

[equation 155]

$$[t_{51}, t_{52}]$$

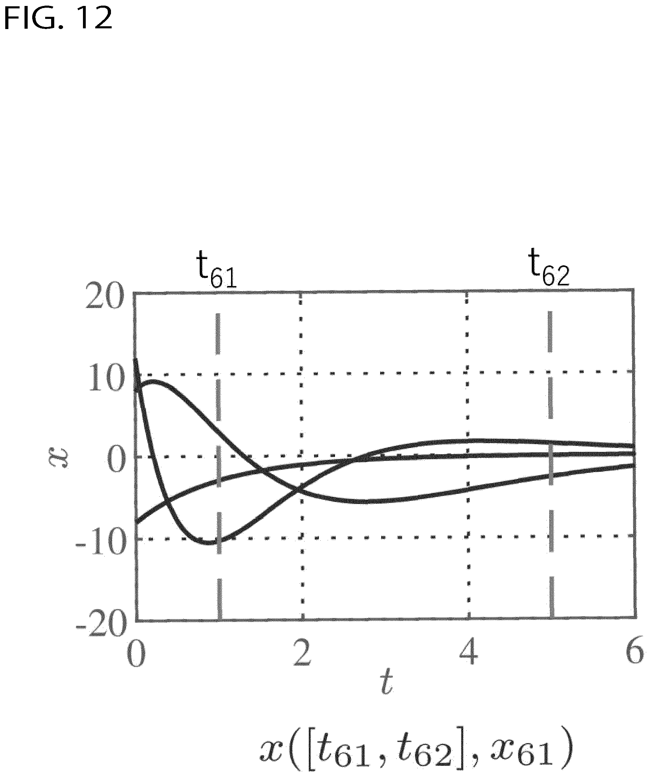

Figure 12 shows the time-series data in the time interval:

[equation 156]

$$[t_{61}, t_{62}]$$

The data acquisition unit 10 of the data processing device 1 in Fig. 1 acquires time-series state data sets:

[equation 159]

$$x([t_{11}, t_{12}], x_{11}), \ x([t_{21}, t_{22}], x_{11}), \ \cdots, \ x([t_{61}, t_{62}], x_{61})$$

in the six time intervals shown in Figs. 7 through 12. In this case,:

[equation 145]

$$E(t)$$

and:

$$[equation\ 86]$$

$$E_0$$

are determined by (17) and (18), respectively. Then, the following is obtained.

$$[equation\ 160]$$

$$D_2 = \begin{bmatrix} -111.330 & 58.021 & -4.521 & 76.071 & 19.440 & 113.823 \\ -114.141 & -218.566 & -104.632 & -112.263 & -107.462 & 6.134 \\ 2.389 & 27.479 & -233.018 & 31.881 & -169.490 & 6.613 \\ -70.105 & -46.067 & -7.410 & -59.942 & -14.605 & 28.202 \\ -79.264 & -55.735 & -9.642 & -9.312 & 2.214 & 48.204 \\ -6.446 & 63.871 & -104.918 & 37.316 & -46.008 & 36.435 \end{bmatrix}$$

This means the following.

$$[equation\ 161]$$

$$\mathrm{rank}(D_2) \;=\; 6 \;=\; (1/2)n(n + 1)$$

Therefore, (22) holds and there exists a unique solution X to the linear equation (22).
The controllability Gramian calculation unit 12 solves (22) numerically to obtain the following values.
[equation 162]

$$X = \begin{bmatrix} 6.813 & 0 & 0.875 \\ 0 & 2.438 & 0.875 \\ 0.875 & 0.875 & 0.500 \end{bmatrix} \qquad (31)$$

This is consistent with the true value (30), indicating the usefulness of this embodiment.

[Verification 2]

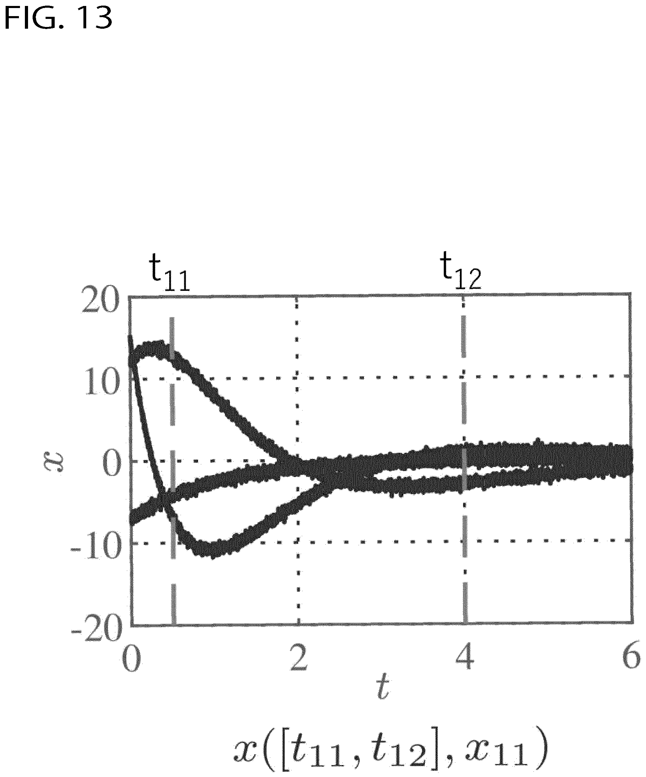

The following shows the results by the second embodiment with respect to a set of time-series state data including noise. Figures 13 through 18 show the time-series data including noise. Specifically,
Figure 13 shows the time-series data in the time interval:

$$[equation\ 151]$$

$$\left[ t_{11}, t_{12} \right]$$

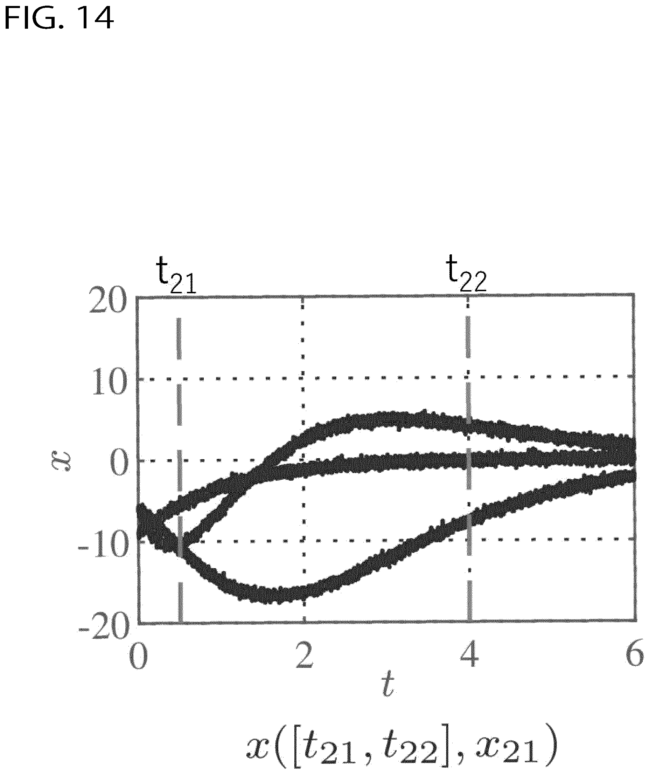

Figure 14 shows the time-series data in the time interval:

[equation 152]

$$[t_{21}, t_{22}]$$

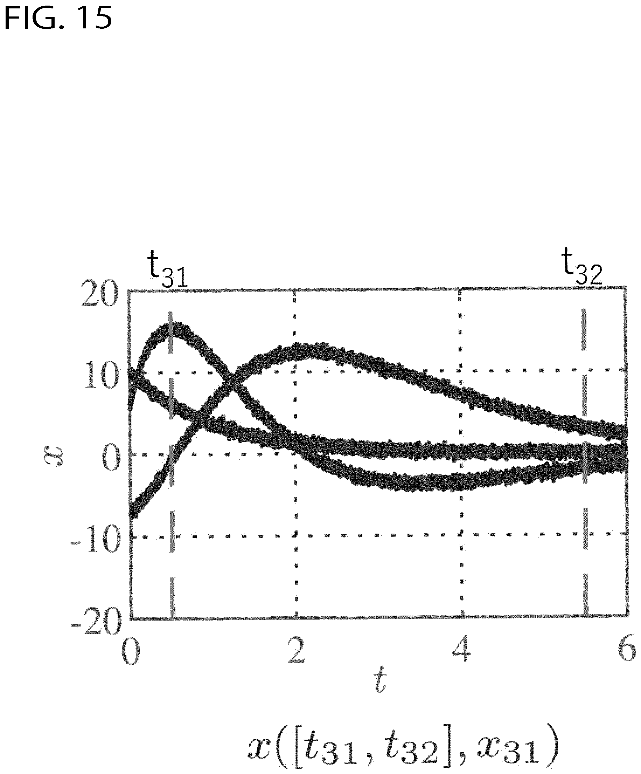

Figure 15 shows the time-series data in the time interval:

[equation 153]

$$[t_{31}, t_{32}]$$

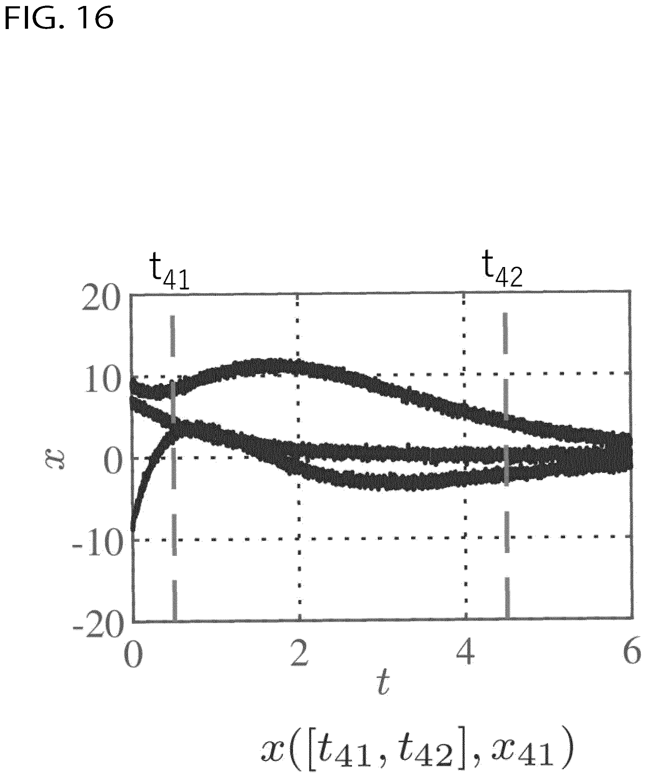

Figure 16 shows the time-series data in the time interval:

[equation 154]

$$[t_{41}, t_{42}]$$

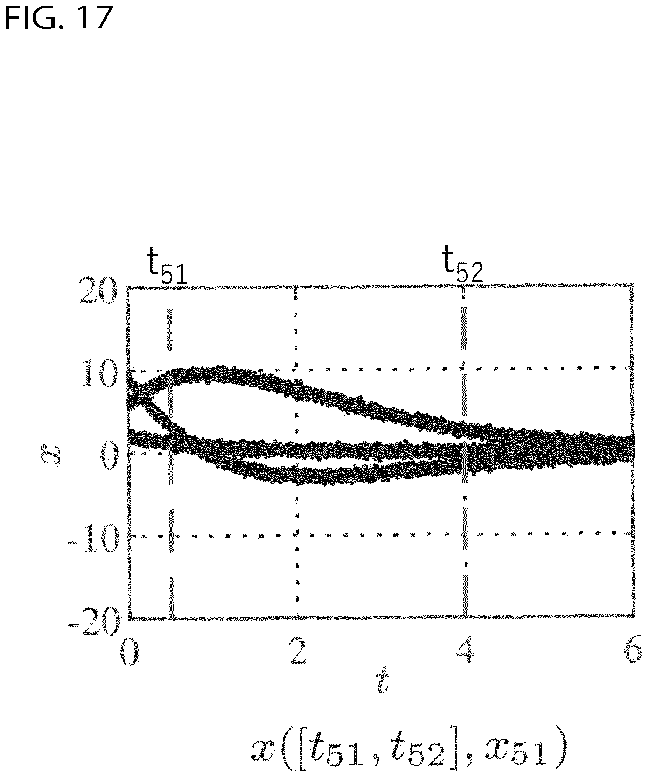

Figure 17 shows the time-series data in the time interval:

[equation 155]

$$[t_{51}, t_{52}]$$

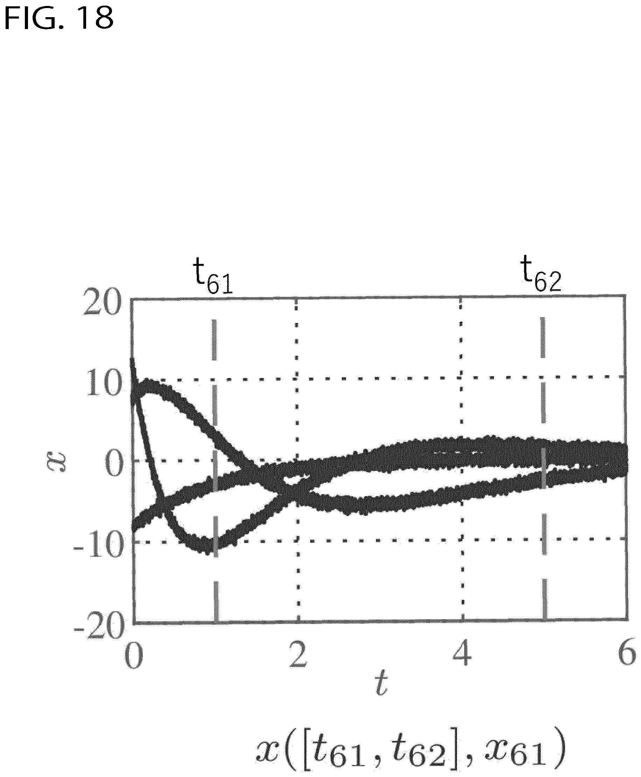

Figure 18 shows the time-series data in the time interval:

[equation 156]

$$[t_{61}, t_{62}]$$

The signals in Figs. 13 to 18 are the signals in Figs. 7 to 12 plus noise with mean 0 and variance 0.1, respectively.
The controllability Gramian calculation unit 12 solves (23) numerically to obtain the following values.
[equation 163]

$$X = \begin{bmatrix} 6.612 & 0.016 & 0.812 \\ 0.016 & 2.228 & 0.826 \\ 0.812 & 0.826 & 0.470 \end{bmatrix} \qquad (32)$$

This result is largely consistent with the true value (30), although it is worse than (31).

[Verification 3]

The following is the actual result obtained using the third embodiment with respect to sets of time-series state data including noise. In this case, the sets of the time-series state data are also shown in Figs. 13 through 18, as described above.

Here, we assume that we have prior knowledge that:

[equation 140]

$$G(\infty)$$

has the following pattern of sign.

[equation 164]

$$\begin{bmatrix} + & 0 & * \\ 0 & + & * \\ * & * & + \end{bmatrix}$$

Here, * indicates that the sign is unknown. Then, the problem of estimating:

[equation 140]

$$G(\infty)$$

boils down to the following optimization problem.

[equation 165]

$$\begin{cases} \min_{\xi \in \mathbf{R}^6} \|D_2\xi - d_2\|_2 \\ \text{s.t. } \xi_1 > 0, \ \xi_3 > 0, \ \xi_6 > 0, \ \xi_2 = 0 \end{cases} \tag{33}$$

Here, :

[equation 166]

$$D_2 \in \mathbf{R}^{6 \times 6}$$

and

[equation 167]

$$d_2 \in \mathbf{R}^6$$

are related to (21) and used in (23).

[equation 168]

$$\xi \in \mathbf{R}^6$$

corresponds to:

[equation 169]

$$\mathrm{rvec}(X)$$

of (21).

[equation 170]

$$\xi_i$$

is the i-th component of:

[equation 171]

$$\xi$$

[equation 172]

$$X = \begin{bmatrix} 6.657 & 0 & 0.794 \\ 0 & 2.250 & 0.806 \\ 0.794 & 0.806 & 0.526 \end{bmatrix}$$

is obtained by numerically computing (33). This approximate solution applying the above prior knowledge is closer to the true value (30) than the approximate solution (32).

[Verification 4]

The following describes the results obtained from the fourth embodiment using the data in Figures 7 through 12. In this case,:

[equation 173]

$$D_1 = \begin{bmatrix} -114.033 & 53.362 & -6.242 & 38.923 & -9.110 & -3.311 \\ -56.781 & -280.494 & -88.226 & -114.210 & -113.084 & -29.771 \\ 8.664 & 11.552 & -230.861 & 9.445 & -185.936 & -36.786 \\ -54.121 & -66.226 & -2.459 & -70.825 & -24.182 & -18.020 \\ -79.077 & -58.335 & -9.658 & -21.689 & -7.737 & -1.471 \\ -1.685 & 53.084 & -104.062 & 17.608 & -60.784 & -8.659 \end{bmatrix}$$

is obtained. (12) holds since:

[equation 174]

$$\mathrm{rank}(D_1) = 6 = (1/2)n(n+1)$$

holds. Namely, there exists a unique solution Y for (10) with respect to:

[equation 7]

$$Q := I \quad .$$

Numerical calculation in the embodiment yields the following.

[equation 175]

$$\tilde{Y}^* = \begin{bmatrix} 1.500 & 0.500 & 1.250 \\ 0.500 & 0.500 & 1.250 \\ 1.250 & 1.250 & 6.750 \end{bmatrix}$$

[Verification 5]

The following is the results obtained from the fifth embodiment using the data in Figures 7 through 12. The first input matrix:

[equation 176]

$$\tilde{B}_1^* = \begin{bmatrix} 0.223 \\ 0.192 \\ 0.956 \end{bmatrix}$$

is obtained with respect to:

[equation 48]

$$\mathbf{B} = \bigcup_{m=1}^{\infty} \mathbf{R}^{3 \times m}$$

by the numerical calculation according to the embodiment when:

[equation 47]

$$\mathbf{B} \subset \bigcup_{m=1}^{\infty} \mathbf{R}^{n \times m}$$

holds.

[equation 141]

$$\mathrm{tr}(G(\infty))$$

takes the maximum value of:

[equation 177]

$$\mathrm{tr}(G(\infty)) = 7.293$$

by this first input matrix. In contrast to this result,:

[equation 141]

$$\mathrm{tr}(G(\infty))$$

takes the value of:

[equation 179]

$$\text{tr}(G(\infty)) = 4.917$$

when the input matrix:

[equation 178]

$$B \in \mathbf{R}^{3 \times 3}$$

with all components 1/3 is used as an example for comparison.

This is clearly smaller than the value:

[equation 177]

$$\text{tr}(G(\infty)) = 7.293$$

obtained in the embodiment.

[Verification 6]

The following are the results obtained from the sixth embodiment using the data in Figures 7 through 12. The second input matrix:

[equation 181]

$$\tilde{B}_2^* = \begin{bmatrix} 0 & 0 & 0 \\ 0 & 0 & 0 \\ 0 & 0 & 1 \end{bmatrix}$$

is obtained with respect to:

[equation 180]

$$\text{tr}(G(\infty)) = 6.750$$

by the numerical calculation according to the embodiment when:

[equation 49]

$$\mathbf{B} = \mathbf{D}_n$$

holds.

The values of:

[equation 141]

$$\mathrm{tr}\big(G(\infty)\big)$$

in each case of:

[equation 49]

$$\mathbf{B} = \mathbf{D}_n$$

are shown in Table 1. From this, it is understood that:

[equation 12]

$$\tilde{B}_2^*$$

is the most effective input matrix, indicating the usefulness of this embodiment.

[Table 1]

| $B$ | $\mathrm{tr}(G(\infty))$ |
|---|---|
| $[e_1\ 0\ 0]$ | 1.500 |
| $[0\ e_2\ 0]$ | 0.500 |
| $\tilde{B}_2^* = \begin{bmatrix} 0 & 0 & e_3 \end{bmatrix}$ | 6.750 |

Embodiments in case the amount of action changes

In the embodiments described above, one of the goals was to estimate the "ease of control" index when the input channel to each node of the network is fixed (Problem 1(i)).

In other words, the following problems were discussed.

(Problem 1)

For the system shown in Equation (1), we assume that the matrix A is a Hurwitz matrix and is unknown. We assume that a set of data:

[equation 43]

$$x\big([t_{i1}, t_{i2}], x_{i1}\big) \quad (i = 1, 2, \ldots; q)$$

consisting of segments of q state trajectories is given. Here,:

[equation 44]

$$t_{i1} < t_{i2}$$

holds.

(i) :

[equation 140]

$$G(\infty)$$

is estimated when a known input matrix B:

[equation 43]

$$x\big([t_{i1}, t_{i2}], x_{i1}\big) \quad (i = 1, 2, \ldots; q)$$

is given.

In other words, in the embodiments explained above, it was assumed that the amount of action between each node constituting the network, i.e., the strength of the connection between nodes and an indicator of the amount of transmitted data, are all fixed values. In this case, it was possible to know how to select input channels to improve ease of control. In contrast, the following describes the estimation of ease of control when the amount of action is adjusted, i.e., estimation of controllability Gramian when the amount of action changes. The goal is to know how to adjust the action amount in order to improve the ease of control.

In the following, we consider the estimation of the controllability Gramian when a change $\Delta$ is added to an unknown matrix A. This problem can be formulated as follows.

(Problem 3)

We consider the system in Equation (1). Here, we assume that:

[equation 28]

$$B \in \mathbf{R}^{n \times m}$$

is known, while:

[equation 27]

$$A \in \mathbf{R}^{n \times n}$$

is unknown. Also, we assume that the data of N state trajectories are given to the system as follows:
[equation 182]

$$\mathcal{D}: \ x([t_{i1}, t_{i2}], x_{i1}) \ (i = 1, 2, \ldots, N) \qquad (34)$$

Here,:

[equation 183]

$$t_{i1} < t_{i2} \ (i = 1, 2, \ldots, N)$$

holds. Also, we assume that:

[equation 185]

$$\Delta \in \mathbf{R}^{n \times n}$$

such that:

[equation 184]

$$A + \Delta$$

is a stable matrix is arbitrarily given. At this point, we obtain:

[equation 186]

$$G_{\mathrm{c}}(A + \Delta)$$

Problem 3 is to estimate the value of the controllability Gramian from the data when the A matrix is varied by $\Delta$ for the system in Equation (1). This problem appears, for example, when applying state feedback to the system or when adjusting the connection strength between nodes in a network system.

[Data-driven solution of the Lyapunov equation] In the following, we describe a method for solving the Lyapunov equation using the state trajectories of the system as a preparation for Problem 3. We consider the following system:

[equation 187]

$$\dot{x}(t) = \tilde{A}x(t) \qquad (35)$$

Here,:

[equation 188]

$$\tilde{A} \in \mathbf{R}^{n \times n}$$

is a stability matrix. Also, the state trajectory of the system in equation (35) can be expressed in the same way as described above as:

[equation 189]

$$x(t, t_1, x_1)$$

For this system, we consider the following Lyapunov equation.
[equation 190]

$$(\tilde{A} + \tilde{\Delta})^{\top} Y + Y(\tilde{A} + \tilde{\Delta}) = -Q \qquad (36)$$

Here,:

[equation 191]

$$\tilde{\Delta} \in \mathbf{R}^{n \times n}$$

is a matrix such that:

[equation 192]

$$\tilde{A} + \tilde{\Delta}$$

is stable, and:

[equation 193]

$$Q \in \mathbf{S}_n$$

is a symmetric matrix. In this case, it is known that equation (36) has a unique solution.
At this point, we consider the following problem

(Problem 4)

We consider the system in Equation (35). Here,:

[equation 194]

$$\tilde{A} \in \mathbf{R}^{n \times n}$$

is assumed to be stable but unknown. For this system, we assume that the data D of N state trajectories are given as in Problem 3. Also, we assume that:

[equation 191]

$$\tilde{\Delta} \in \mathbf{R}^{n \times n}$$

and:

[equation 193]

$$Q \in \mathbf{S}_n$$

such that:

[equation 192]

$$\tilde{A} + \tilde{\Delta}$$

is a stable matrix are arbitrarily given. In this case, we obtain the solution of Equation (36).

The solution to Problem 4 is given as follows. First, for both sides of equation (36), we consider the quadratic form with respect to the state trajectory:

[equation 195]

$$x(t)$$

then:
[equation 196]

$$x^\top(t)\left(\tilde{A}^\top Y + Y\tilde{A}\right)x(t) + x^\top(t)\left(\tilde{\Delta}^\top Y + Y\tilde{\Delta}\right)x(t)$$
$$= -x^\top(t)Qx(t) \qquad (37)$$

holds. Here,:
[equation 198]

$$\frac{d}{dt}\left(x^{\top}(t)Yx(t)\right) + x^{\top}(t)\left(\tilde{\Delta}^{\top}Y + Y\tilde{\Delta}\right)x(t)$$
$$= -x^{\top}(t)Qx(t)$$

$$(38)$$

is obtained since:

[equation 197]

$$x^{\top}(t)(Y\tilde{A} + \tilde{A}^{\top}Y)x(t)$$
$$= x^{\top}(t)Y(\tilde{A}x(t)) + (\tilde{A}x(t))^{\top}Yx(t)$$
$$= x^{\top}(t)Y\dot{x}(t) + \dot{x}^{\top}(t)Yx(t) = \frac{d}{dt}\left(x^{\top}(t)Yx(t)\right)$$

holds for the first term on the left side.
Furthermore,:
[equation 199]

$$x^{\top}(t_2)Yx(t_2) - x^{\top}(t_1)Yx(t_1)$$
$$+ \int_{t_1}^{t_2} x^{\top}(t)\left(\tilde{\Delta}^{\top}Y + Y\tilde{\Delta}\right)x(t)\ dt$$
$$= -\int_{t_1}^{t_2} x^{\top}(t)Qx(t)\ dt$$

$$(39)$$

is obtained by integrating both sides of this equation over the time interval:

[equation 41]

$$\left[t_1, t_2\right] \quad .$$

Here, N linear equations for the unknown number Y:
[equation 201]

$$x_i^\top(t_{i2})Y x_i(t_{i2}) - x_i^\top(t_{i1})Y x_i(t_{i1})$$

$$+ \int_{t_{i1}}^{t_{i2}} x_i^\top(t)\left(\tilde{\Delta}^\top Y + Y\tilde{\Delta}\right) x_i(t)\, dt$$

$$= -\int_{t_{i1}}^{t_{i2}} x_i^\top(t) Q x_i(t)\, dt \quad (i = 1, 2, \ldots, N) \tag{40}$$

is obtained by applying the state trajectory data:

[equation 200]

$$x_i(t) := x(t, t_{i1}, x_{i1})$$

to equation (39).

Next, we consider rewriting equation (40) in a matrix-based form. First, equation (39) can be expressed as:
[equation 202]

$$\left(\operatorname{lvec}(x(t_2), x(t_2)) - \operatorname{lvec}(x(t_1), x(t_1))\right.$$

$$\left. + \int_{t_1}^{t_2} (\operatorname{lvec}(\tilde{\Delta}x(t), x(t)) + \operatorname{lvec}(x(t), \tilde{\Delta}x(t)))dt \right)\operatorname{rvec}(Y)$$

$$= -\int_{t_1}^{t_2} \operatorname{lvec}(x(t), x(t))dt\ \operatorname{rvec}(Q) \tag{41}$$

using lvec and rvec. If this is noted, Equation (40) can be rewritten as:
[equation 203]

$$\tilde{D}_1\operatorname{rvec}(Y) = \tilde{D}_2\operatorname{rvec}(Q) \tag{42}$$

equivalently. Here;:

[equation 204]

$$\tilde{D}_1, \tilde{D}_2 \quad \in \quad \mathbf{R}^{N \times (1/2)n(n+1)}$$

are matrices determined by the state trajectory data of the system in Equation (35) and their i-th row:

[equation 205]

$$\tilde{d}_{1i}, \tilde{d}_{2i} \in \mathbf{R}^{1 \times (1/2)n(n+1)}$$

are given by:

[equation 206]

$$\tilde{d}_{1i} := \mathrm{lvec}(x_i(t_{i2}), x(t_{i2})) - \mathrm{lvec}(x_i(t_{i1}), x_i(t_{i1}))$$
$$+ \int_{t_{i1}}^{t_{i2}} \Big( \mathrm{lvec}(\tilde{\Delta}x_i(t), x_i(t))$$
$$+ \mathrm{lvec}(x_i(t), \tilde{\Delta}x_i(t)) \Big) \, dt$$

[equation 207]

$$\tilde{d}_{2i} := - \int_{t_{i1}}^{t_{i2}} \mathrm{lvec}(x_i(t), x_i(t)) \, dt$$

respectively.

The solution to Problem 4 is then obtained as follows.

(Theorem 3)

We consider Problem 4. If:
[equation 68]

$$\mathrm{rank}(D_1) = \frac{1}{2}n(n+1) \qquad (12)$$

holds, the solution of equation (40) is unique in the range of symmetric matrices and is equal to the solution of Problem 4. (End of Theorem 3).

[Data-driven estimation of controllability Gramians].

Next, we consider the solution to Problem 3.

Data Transformation

[equation 186]

$$G_{\mathrm{c}}(A + \Delta)$$

can be computed using Theorem 3 if state trajectory data of:
[equation 74]

$$\dot{z}(t) = A^\top z(t) \qquad\qquad (13)$$

which is a dual system of Equation (35) are available. This proposition can be expressed as follows. From Lemma 1, the controllability:

[equation 186]

$$G_{\mathrm{c}}(A + \Delta)$$

is obtained as a unique solution of where equation of:
[equation 208]

$$(A + \Delta)X + X(A + \Delta)^\top = -BB^\top \qquad\qquad (43) \qquad \cdot$$

Similarly to the above discussion,:
[equation 212]

$$z^\top(t_2)Xz(t_2) - z^\top(t_1)Xz(t_1)$$
$$+ \int_{t_1}^{t_2} z^\top(t)\big(\Delta X + X\Delta^\top\big)z(t)\,dt$$
$$= -\int_{t_1}^{t_2} z^\top(t)BBz(t)\,dt \qquad\qquad (44)$$

is obtained if we note that equation (43) corresponds to equation (36) to which:

[equation 209]

$$\tilde{A} = A^\top$$

[equation 210]

$$\tilde{\Delta} = \Delta^\top$$

[equation 211]

$$Q = BB^\top$$

are applied. Thus, by applying the state trajectory of the system in equation (13) to equation (44), a linear equation with the solution of:

[equation 186]

$$G_{\mathrm{c}}(A + \Delta)$$

can be constructed from the state trajectory data only.

However, in Problem 3, the state trajectory of the system in Equation (13) is not generally available except in the case that

[equation 213]

$$A = A^{\top}$$

holds. Therefore, the above ideas cannot be used directly for Problem 3. On the other hand, if the state trajectory of the system in Equation (35) can be transformed into the state trajectory of the system in Equation (13), a solution to Problem 3 can be constructed. Such a data transformation is accomplished by the following Lemma 5.

(Lemma 5)

We express the state trajectory of the system of Equation (13) by:

[equation 214]

$$z(t, t_{i1}, z_{i1})$$

in the same way as aforementioned

[equation 193]

$$Q \in \mathbf{S}_n$$

. We assume that the state trajectory data D in Problem 3 is arbitrarily given. Here, we assume that N ≥ n. We assume that, for this D,:

[equation 215]

$$E(t) \in \mathbf{R}^{n \times n}$$

[equation 216]

$$E_0 \in \mathbf{R}^{n \times n}$$

[equation 217]

$$h \in (0, \infty)$$

are defined by:
[equation 218]

$$E(t) := \begin{bmatrix} x(t + t_{11}, t_{11}, x_{11}) & x(t + t_{21}, t_{21}, x_{21}) \end{bmatrix}$$
$$\cdots \quad x(t + t_{n1}, t_{n1}, x_{n1})]$$

$$E_0 := \begin{bmatrix} x_{11} & x_{21} & \cdots & x_{n1} \end{bmatrix} \qquad (45)$$

$$h := \min_{i \in \{1,2,\ldots,n\}} (t_{i2} - t_{i1})$$

respectively. In this case, if $E_0$ is regular,:
[equation 221]

$$z(t, t_{i1}, x_{i1}) = \left( E(t) E_0^{-1} \right)^\top x_{i1} \qquad (46)$$

holds for arbitrary:

[equation 219]

$$i \in \{1, 2, \ldots, N\}$$

and:

[equation 220]

$$t \in [0, h] \quad .$$

[Data-driven estimation].

We give the solution to problem 3 using the above results. First, we assume that the function:

[equation 222]

$$z_i(t) \in \mathbf{R}^n \ (i = 1, 2, \ldots, N)$$

is defined by the following.

[equation 223]

$$z_i(t) := (E(t)E_0^{-1})^\top x_{i1}$$

Then N linear equations:
[equation 225]

$$z_i^\top(h)Xz_i(h) - z_i^\top(0)Xz_i(0)$$
$$+ \int_0^h z_i^\top(t)(\Delta X + X\Delta^\top)z_i(t)\,dt$$
$$= -\int_0^h z_i^\top(t)BBz_i(t)\,dt \quad (i = 1, 2, \ldots, N) \qquad (47)$$

are obtained by applying:

[equation 224]

$$z(t) = z_i(t) \ (i = 1, 2, \ldots, N)$$

to equation (44). Furthermore,:

[equation 226]

$$D_1 \operatorname{rvec}(X) = D_2 \operatorname{rvec}(BB^\top)$$

is obtained as an equivalent expression to equation (47). is obtained. Here,:

[equation 227]

$$D_1, D_2 \in \mathbf{R}^{N \times (1/2)n(n+1)}$$

are matrices determined by the state trajectory data D in Problem 3 and their i-th row:

[equation 228]

$$d_{1i}, d_{2i} \in \mathbf{R}^{1 \times (1/2)n(n+1)}$$

are given by:

[equation 229]

$$d_{1i} := \mathrm{lvec}(z_i(h), z_i(h)) - \mathrm{lvec}(z_i(0), z_i(0))$$
$$+ \int_0^h \Big( \mathrm{lvec}(\Delta^\top z_i(t), z_i(t))$$
$$+ \mathrm{lvec}(z_i(t), \Delta^\top z_i(t)) \Big) \, dt$$

[equation 230]

$$d_{2i} := - \int_0^h \mathrm{lvec}(z_i(t), z_i(t)) \, dt$$

respectively.

Thus, the solution to Problem 3 can be obtained as follows.

(Theorem 4)

We consider Problem 3. Here, we assume that $N \geq n$. If $E_0$ in Equation (45) is regular and:
[equation 68]

$$\mathrm{rank}(D_1) = \frac{1}{2} n(n+1) \qquad (12)$$

holds, the solution of Equation (47) is unique in the range of symmetric matrices and is equal to the solution of Problem 3.

The thirteenth embodiment

As in the first embodiment, Figure 1 is used to describe the data processing device according to the thirteenth embodiment.
Figure 1 is a functional block diagram of the data processing device 1 according to the thirteenth embodiment. The data processing device 1 comprises a data acquisition unit 10, a controllability Gramian calculation unit 12 and an output unit 15.
The data processing device 1 estimates:

[equation 232]

$$G_{\mathrm{c}}(A + \Delta)$$

when:

[equation 1]

$$\dot{x}(t) = Ax(t) + Bu(t)$$

holds and the limit of controllability Gramian of matrix A, which is defined by:

[equation 2]

$$G(t) := \int_0^t e^{A\tau} BB^\top e^{A^\top \tau} d\tau \quad '$$

is defined by:

[equation 231]

$$G_{\mathrm{c}}(A)$$

where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix.

The data acquisition unit 10 acquires a set of time-series state data in a plurality of time intervals. In the following description, the data acquisition unit 10 acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals.

[equation 4]

$$[t_{i1}, t_{i2}] \quad (i = 1, 2, \ldots, q)$$

The controllability Gramian calculation unit 12 defines:

[equation 75]

$$z(t) \in \mathbf{R}^n$$

expressed as:
[equation 74]

$$\dot{z}(t) = A^\top z(t) \tag{13}$$

based on the sets of state data:

[equation 145]

$$E(t)$$

acquired by the data acquisition unit 10, calculates:
[equation 81]

$$z^\top(t_2)Xz(t_2) - z^\top(t_1)Xz(t_1) = -\int_{t_1}^{t_2} z^\top(t)BB^\top z(t)dt \tag{16}$$

[equation 89]

$$z(t + t_{i1}, t_{i1}, x_{i1}) = (E(t)E_0^{-1})^\top x_{i1}$$

and estimates:

[equation 233]

$$G_{\mathrm{c}}(A + \Delta) = X$$

by numerically obtaining the solution X of the following linear equation.
[equation 225]

$$z_i^\top(h) X z_i(h) - z_i^\top(0) X z_i(0)$$

$$+ \int_0^h z_i^\top(t)\left(\Delta X + X \Delta^\top\right) z_i(t)\, dt$$

$$= - \int_0^h z_i^\top(t) B B z_i(t)\, dt \quad (i = 1, 2, \ldots, N) \qquad (47)$$

The output unit 15 outputs the controllability Gramian estimated by the controllability Gramian calculation unit 12.

According to this embodiment, the controllability Gramian can be estimated when the amount of action between each node constituting the network changes.

The present disclosure has been described above based on the embodiments. It is understood by those skilled in the art that these embodiments are examples, that various variations are possible in the combination of each component and each processing process and that such variations are also within the scope of the disclosure.

Any combination of the above mentioned embodiments and variations is also useful as an embodiment of the disclosure. The new embodiment resulting from the combination will have the respective effects of each of the embodiments and variations that are combined.

INDUSTRIAL APPLICABILITY

The principle of the disclosure can be applied to the control of systems in various fields as follows. (Application example 1) When the control object is an electric power system, optimal power supply control can be performed based on time-series data of power generation, power consumption, temperature and humidity, etc. at each power plant.

(Application example 2) When the control object is a robot, optimal posture control can be performed based on time-series data such as load, posture, external force and motion state, etc.

(Application example 3) When the control object is a human body, optimal medication control can be performed based on time-series data such as blood pressure, pulse rate, body temperature and blood composition, etc.

(Application example 4) When the control object is a chemical plant, the system can perform optimal operation control based on time-series data such as temperature, humidity, air pressure and the amount of dust in the air, etc.

(Application example 5) When the control object is equipment maintenance, optimal maintenance control can be performed based on time-series data such as failure alarm frequency, electrical resistance, metal fatigue and heat generation, etc.

REFERENCE SIGNS LIST

1. Data processing device.
2. Data processing device.
3. Control system.
4. Control system.
5. Control system.
10. Data acquisition unit.
12. Controllability Gramian calculation unit.
14. Maximization condition calculation unit.
15. Output unit.
16. Sensor.
18. Control unit.
19: Control unit.
100: Control object.
191: Control input value determination unit.

192: Input channel determination unit.
S1: The step of acquiring a set of time-series state data.
S2: The step of estimating the controllability Gramian.
S3: The step of outputting the controllability Gramian.
S4: The step of estimating the condition when the controllability Gramian is maximum.
S5: The step of outputting the input matrix when the controllability Gramian is maximized.

**Claims**

1. A data processing device to estimate the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix, comprising:

a data acquisition unit that acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a controllability Gramian calculation unit that defines:

[equation 75]

$$z(t) \in \mathbf{R}^n$$

expressed as:
[equation 74]

$$\dot{z}(t) = A^\top z(t) \qquad\qquad (13) \quad,$$

calculates:
[equation 81]

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimates:

[equation 146]

$$G(\infty) = X$$

by numerically obtaining the solution X of the following linear equation:

[equation 6]

$$x_{i1}^\top (E(h)E_0^{-1}) X (E(h)E_0^{-1})^\top x_{i1} - x_{i1}^\top X x_{i1}$$

$$= -\int_0^h x_{i1}^\top (E(t)E_0^{-1}) BB^\top (E(t)E_0^{-1})^\top x_{i1}dt$$

$$(i = 1, 2, \ldots, q)$$

with respect to:

[equation 157]

$$E(t) := [x(t+t_{11}, t_{11}, x_{11}) \quad x(t+t_{21}, t_{21}, x_{21}) \quad \cdots \quad x(t+t_{n1}, t_{n1}, x_{n1})]$$

[equation 158]

$$E_0 := \begin{bmatrix} x_{11} & x_{21} & \cdots & x_{n1} \end{bmatrix} \quad;$$

and
an output unit that outputs the estimated controllability Gramian.

2. The data processing device according to claim 1,

wherein the set of time-series state data acquired by the data acquisition unit includes noise and wherein the controllability Gramian calculation unit estimates:

[equation 146]

$$G(\infty) = X$$

by numerically obtaining the solution X of the following liner equation:
[equation 108]

$$x_{i1}^\top (E(h)E_0^+)X(E(h)E_0^+)^\top x_{i1} - x_{i1}^\top X x_{i1}$$
$$= -\int_0^h x_{i1}^\top (E(t)E_0^+)BB^\top (E(t)E_0^+)^\top x_{i1} dt$$
$$(i = 1, 2, \ldots, p) \qquad (23)$$

instead of the liner equation:

[equation 6]

$$x_{i1}^\top (E(h)E_0^{-1})X(E(h)E_0^{-1})^\top x_{i1} - x_{i1}^\top X x_{i1}$$
$$= -\int_0^h x_{i1}^\top (E(t)E_0^{-1})BB^\top (E(t)E_0^{-1})^\top x_{i1} dt$$
$$(i = 1, 2, \ldots, q)$$

3. The data processing device according to claim 2,
   wherein the controllability Gramian calculation unit performs numerical calculations using prior knowledge about the signs of some or all of the matrix components of the solution X.

4. A data processing device to estimate the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix, comprising:

a data acquisition unit that acquires a set of time-series state data:

[equation 5]

$$x([t_{11},t_{12}], x_{11}), x([t_{21},t_{22}], x_{11}), \cdots, x([t_{q1},t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a maximization condition calculation unit that estimates the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^{\top}(t_{i2}, t_{i1}, x_{i1}) Y x(t_{i2}, t_{i1}, x_{i1}) - x_{i1}^{\top} Y x_{i1}$$

$$= - \int_{t_{i1}}^{t_{i2}} x^{\top}(t, t_{i1}, x_{i1}) Q x(t, t_{i1}, x_{i1}) dt$$

$$(i = 1, 2, \ldots, q)$$

when:

[equation 7]

$$Q := I$$

holds
; and
an output unit that outputs the input matrix when the controllability Gramian is maximized based on the estimated maximization condition.

**5.** The data processing device according to claim 4,
wherein the maximization condition calculation unit obtains a first input matrix:

[equation 11]

$$\tilde{B}_1^*$$

by calculating the unit eigenvector corresponding to the maximum eigenvalue of:

[equation 9]

$$\tilde{Y}*$$

when:

[equation 47]

$$\mathbf{B} \subset \bigcup_{m=1}^{\infty} \mathbf{R}^{n \times m}$$

holds.

6. The data processing device according to claim 4,
wherein the maximization condition calculation unit obtains a second input matrix:

[equation 12]

$$\tilde{B}_2^*$$

by calculating the n × n matrix in which the (k, k) component is 1 and the other components are 0, where the (k, k) component is the one that is the maximum among the diagonal components of:

[equation 9]

$$\tilde{Y}^* \quad ,$$

when:

[equation 49]

$$\mathbf{B} = \mathbf{D}_n$$

holds.

7. A control system to control external control objects, comprising:

a sensor that detects a set of time-series state data from the control objects;
the data processing device according to any one of claims 1 to 3; and
a control unit to control the control objects,
wherein the sensor transmits the detected set of state data to the data acquisition unit of the data processing device,
wherein the data processing device transmits the estimated:

[equation 146]

$$G(\infty) = X$$

to the control unit and

wherein the control unit controls the control objects based on:

[equation 146]

$$G(\infty) = X \quad .$$

8. A control system to control external control objects, comprising:

a sensor that detects a set of time-series state data from the control objects;
the data processing device according to any one of claims 4 to 6; and
a control unit to control the control objects,
wherein the sensor transmits the detected set of state data to the data acquisition unit of the data processing device,
wherein the data processing device transmits the estimated matrix B which maximizes:

[equation 141]

$$\mathrm{tr}(G(\infty))$$

to the control unit and
wherein the control unit controls the control objects based on:

[equation 146]

$$G(\infty) = X$$

.

9. A data processing method to estimate the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix, comprising:

acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
defining:

[equation 75]

$$z(t) \in \mathbf{R}^n$$

expressed as:
[equation 74]

$$\dot{z}(t) = A^\top z(t) \qquad\qquad (13) \quad,$$

calculating:
[equation 81]

$$z^\top(t_2) X z(t_2) - z^\top(t_1) X z(t_1) = -\int_{t_1}^{t_2} z^\top(t) B B^\top z(t) dt \qquad (16)$$

[equation 89]

$$z(t + t_{i1}, t_{i1}, x_{i1}) = (E(t) E_0^{-1})^\top x_{i1}$$

and estimating:

[equation 146]

$$G(\infty) = X$$

by numerically obtaining the solution X of the following linear equation:

[equation 6]

$$x_{i1}^\top (E(h)E_0^{-1}) X (E(h)E_0^{-1})^\top x_{i1} - x_{i1}^\top X x_{i1}$$
$$= - \int_0^h x_{i1}^\top (E(t)E_0^{-1}) BB^\top (E(t)E_0^{-1})^\top x_{i1} dt$$
$$(i = 1, 2, \ldots, q)$$

with respect to:

[equation 157]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})]$$

[equation 158]

$$E_0 := \begin{bmatrix} x_{11} & x_{21} & \cdots & x_{n1} \end{bmatrix} \quad ;$$

and
outputting the estimated controllability Gramian.

**10.** A data processing method to estimate the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} BB^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix, comprising:

acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
estimating the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^{\top}(t_{i2}, t_{i1}, x_{i1})Y x(t_{i2}, t_{i1}, x_{i1}) - x_{i1}^{\top}Y x_{i1}$$

$$= -\int_{t_{i1}}^{t_{i2}} x^{\top}(t, t_{i1}, x_{i1})Q x(t, t_{i1}, x_{i1})dt$$

$$(i = 1, 2, \ldots, q)$$

when:

[equation 7]

$$Q := I$$

holds
; and
outputting the input matrix when the controllability Gramian is maximized based on the estimated maximization condition.

**11.** A program to estimate the limit:

[equation 140]

$$G(\infty)$$

of a controllability Gramian:

[equation 138]

$$G(t)$$

defined by:

[equation 2]

$$G(t) := \int_0^t e^{A\tau} B B^{\top} e^{A^{\top}\tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of a control object,:

[equation 139]

$$u(t)$$

is an m-dimensional vector representing the control input, A is an unknown n x n matrix and B is a known n x m matrix,

wherein the program causes the computer to perform the method, comprising:
acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
defining:

[equation 75]

$$z(t) \in \mathbf{R}^n$$

expressed as:
[equation 74]

$$\dot{z}(t) = A^\top z(t) \qquad (13)$$

calculating:
[equation 81]

$$z^\top(t_2) X z(t_2) - z^\top(t_1) X z(t_1) = -\int_{t_1}^{t_2} z^\top(t) B B^\top z(t) dt \qquad (16)$$

[equation 89]

$$z(t + t_{i1}, t_{i1}, x_{i1}) = (E(t) E_0^{-1})^\top x_{i1}$$

and estimating:

[equation 146]

$$G(\infty) = X$$

by numerically obtaining the solution X of the following linear equation:

[equation 6]

$$x_{i1}^\top (E(h)E_0^{-1})X(E(h)E_0^{-1})^\top x_{i1} - x_{i1}^\top X x_{i1}$$

$$= - \int_0^h x_{i1}^\top (E(t)E_0^{-1})BB^\top (E(t)E_0^{-1})^\top x_{i1}\, dt$$

$$(i = 1, 2, \ldots, q)$$

with respect to:

[equation 157]

$$E(t) := [x(t+t_{11}, t_{11}, x_{11})\ \ x(t+t_{21}, t_{21}, x_{21})\ \cdots\ x(t+t_{n1}, t_{n1}, x_{n1})]$$

[equation 158]

$$E_0 := \begin{bmatrix} x_{11} & x_{21} & \cdots & x_{n1} \end{bmatrix} \quad ;$$

and
outputting the estimated controllability Gramian.

**12.** A program to estimate the matrix B which maximizes the trace:

[equation 141]

$$\mathrm{tr}(G(\infty))$$

of the limit:

[equation 140]

$$G(\infty)$$

of a controllability Gramian:

[equation 138]

$$G(t)$$

defined by:

[equation 2]

$$G(t) := \int_0^t e^{A\tau} B B^\top e^{A^\top \tau} d\tau$$

in:

[equation 144]

$$t = \infty$$

when:

[equation 1]

$$\dot{x}(t) = Ax(t) + Bu(t)$$

holds, where:

[equation 142]

$$x(t)$$

is an n-dimensional vector representing the state of the control object,:

[equation 139]

$$u(t)$$

is an m-dimensional vector representing the control input, A is an unknown n x n matrix and B is a known n x m matrix, wherein the program causes the computer to perform the method, comprising:

acquiring a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
estimating the matrix B which maximizes:

[equation 141]

$$\mathrm{tr}(G(\infty))$$

by numerically obtaining the solution:

[equation 9]

$$\tilde{Y}*$$

of the following linear equation:

[equation 8]

$$x^\top(t_{i2}, t_{i1}, x_{i1}) Y x(t_{i2}, t_{i1}, x_{i1}) - x_{i1}^\top Y x_{i1}$$
$$= - \int_{t_{i1}}^{t_{i2}} x^\top(t, t_{i1}, x_{i1}) Q x(t, t_{i1}, x_{i1}) dt$$
$$(i = 1, 2, \ldots, q)$$

when:

[equation 7]

$$Q := I$$

holds
; and
outputting the input matrix when the controllability Gramian is maximized based on the estimated maximization condition.

**13.** A data processing device to estimate:

[equation 232]

$$G_{\mathrm{c}}(A + \Delta)$$

when:

[equation 1]

$$\dot{x}(t) = Ax(t) + Bu(t)$$

holds and the limit of a controllability Gramian of a matrix A, which is defined by:

[equation 2]

$$G(t) := \int_0^t e^{A\tau} BB^\top e^{A^\top \tau} d\tau \quad ,$$

is defined by:

[equation 231]

$$G_{\mathrm{c}}(A) \quad ,$$

where:

[equation 142]

$$x(t)$$

is an n-dimensional vector representing the state of a control object,:

[equation 139]

$$u(t)$$

is an m-dimensional vector representing the control input, A is an unknown n x n matrix, is a known n x m matrix and $\Delta$ the amount of change in A, comprising:

a data acquisition unit that acquires a set of time-series state data:

[equation 5]

$$x([t_{11}, t_{12}], x_{11}), x([t_{21}, t_{22}], x_{11}), \cdots, x([t_{q1}, t_{q2}], x_{q1})$$

for the following q time intervals:

[equation 4]

$$[t_{i1}, t_{i2}] \quad (i = 1, 2, \ldots, q)$$

when:

[equation 39]

$$u(t) \equiv 0$$

holds;
a controllability Gramian calculation unit that defines:

[equation 75]

$$z(t) \in \mathbf{R}^n$$

expressed as:
[equation 74]

$$\dot{z}(t) = A^\top z(t) \qquad (13) \ ,$$

calculates:
[equation 81]

132

$$z^\top(t_2)Xz(t_2) - z^\top(t_1)Xz(t_1) = -\int_{t_1}^{t_2} z^\top(t)BB^\top z(t)dt \qquad (16)$$

[equation 89]

$$z(t + t_{i1}, t_{i1}, x_{i1}) = (E(t)E_0^{-1})^\top x_{i1}$$

and estimates:

[equation 233]

$$G_{\mathrm{c}}(A + \Delta) = X$$

by numerically obtaining the solution X of the following linear equation.
[equation 225]

$$z_i^\top(h)Xz_i(h) - z_i^\top(0)Xz_i(0)$$

$$+ \int_0^h z_i^\top(t)(\Delta X + X\Delta^\top)z_i(t)\,dt$$

$$= -\int_0^h z_i^\top(t)BBz_i(t)\,dt \quad (i = 1, 2, \ldots, N) \qquad (47)$$

with respect to:

[equation 157]

$$E(t) := [x(t + t_{11}, t_{11}, x_{11}) \quad x(t + t_{21}, t_{21}, x_{21}) \quad \cdots \quad x(t + t_{n1}, t_{n1}, x_{n1})]$$

[equation 158]

$$E_0 := \begin{bmatrix} x_{11} & x_{21} & \cdots & x_{n1} \end{bmatrix},$$

and
an output unit that outputs the estimated controllability Gramian.

FIG. 1

SET OF TIME-SERIES STATE DATA

1

DATA PROCESSING DEVICE

10

DATA ACQUISITION UNIT

12

CONTROLLABILITY GRAMIAN
CALCULATION UNIT

15

OUTPUT UNIT

CONTROLLABILITY GRAMIAN

# FIG. 2

SET OF TIME-SERIES STATE DATA

DATA PROCESSING DEVICE — 2

DATA ACQUISITION UNIT — 10

MAXIMIZATION CONDITION CALCULATION UNIT — 14

OUTPUT UNIT — 15

INPUT MATRIX MAXIMIZING CONTROLLABILITY GRAMIAN

FIG. 3

EP 4 398 130 A1

**FIG. 4**

CONTROL OBJECTS — 100

SET OF TIME-SERIES STATE DATA

CONTROL SYSTEM — 4

SENSOR — 16

DATA PROCESSING DEVICE — 2

DATA ACQUISITION UNIT — 10

MAXIMIZATION CONDITION CALCULATION UNIT — 14

CONTROL UNIT — 18

EP 4 398 130 A1

# FIG. 5

```
        ┌─────────────────┐
        │      START       │
        └─────────────────┘
                 │
                 ▼
   ┌──────────────────────────────────────┐     S1
   │  ACQUIRING SET OF TIME-SERIES STATE DATA │
   └──────────────────────────────────────┘
                 │
                 ▼
   ┌──────────────────────────────────────┐     S2
   │    ESTIMATING CONTROLLABILITY GRAMIAN   │
   └──────────────────────────────────────┘
                 │
                 ▼
   ┌──────────────────────────────────────┐     S3
   │   OUTPUTTING CONTROLLABILITY GRAMIAN    │
   └──────────────────────────────────────┘
                 │
                 ▼
        ┌─────────────────┐
        │       END        │
        └─────────────────┘
```

# FIG. 6

```
                    ┌─────────────┐
                    │    START    │
                    └──────┬──────┘
                           │                                    S1
                           ▼
┌──────────────────────────────────────────────────────────┐
│        ACQUIRING SET OF TIME-SERIES STATE DATA             │
└──────────────────────────┬─────────────────────────────────┘
                           │                                    S4
                           ▼
┌──────────────────────────────────────────────────────────┐
│  ESTIMATING CONDITION FOR MAXIMIZING CONTROLLABILITY GRAMIAN │
└──────────────────────────┬─────────────────────────────────┘
                           │                                    S5
                           ▼
┌──────────────────────────────────────────────────────────┐
│ OUTPUTTING INPUT MATRIX MAXIMIZING CONTROLLABILITY GRAMIAN │
└──────────────────────────┬─────────────────────────────────┘
                           │
                           ▼
                    ┌─────────────┐
                    │     END     │
                    └─────────────┘
```

FIG. 7

$$x([t_{11}, t_{12}], x_{11})$$

FIG. 8

$$x([t_{21}, t_{22}], x_{21})$$

FIG. 9

$$x([t_{31}, t_{32}], x_{31})$$

FIG. 10

$$x([t_{41}, t_{42}], x_{41})$$

FIG. 11

$$x([t_{51}, t_{52}], x_{51})$$

## FIG. 12

$$x([t_{61}, t_{62}], x_{61})$$

FIG. 13

$$x([t_{11}, t_{12}], x_{11})$$

FIG. 14

$$x([t_{21}, t_{22}], x_{21})$$

FIG. 15

$$x([t_{31}, t_{32}], x_{31})$$

FIG. 16

$$x([t_{41}, t_{42}], x_{41})$$

FIG. 17

$$x([t_{51}, t_{52}], x_{51})$$

# FIG. 18

$$x([t_{61}, t_{62}], x_{61})$$

# FIG. 19

CONTROL OBJECTS ~ 100

SET OF TIME-SERIES STATE DATA

CONTROL SYSTEM ~ 5

SENSOR ~ 16

CONTROL UNIT ~ 19

DATA PROCESSING DEVICE ~ 2

INPUT CHANNEL DETERMINATION UNIT ~ 192

DATA ACQUISITION UNIT ~ 10

CONTROLLABILITY GRAMIAN CALCULATION UNIT ~ 12

CONTROL INPUT VALUE DETERMINATION UNIT ~ 191

EP 4 398 130 A1

## INTERNATIONAL SEARCH REPORT

| International application No. |
| --- |
| **PCT/JP2022/033059** |

| A. | CLASSIFICATION OF SUBJECT MATTER |
| --- | --- |

*G06F 17/10*(2006.01)i
FI:    G06F17/10 Z

According to International Patent Classification (IPC) or to both national classification and IPC

| B. | FIELDS SEARCHED |
| --- | --- |

Minimum documentation searched (classification system followed by classification symbols)

G06F17/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | 軸屋 一郎 ほか, 連続時間線形周期システムのＫａｌｍａｎ正準分解に関する一考察 －システムと同じ周期での状態空間の可制御・不可制御部分への分解, 計測自動制御学会論文集, 31 October 2007, vol. 43, no. 10, pp. 892-900 in particular, pp. 893-899, (JIKUYA, Ichiro et al. A Note on Kalman Canonical Decomposition of Linear Periodic Continuous-time Systems -Decomposition of State Space into Controllable and Uncontrollable Parts with the Same Period of Systems. Transactions of the Society of Instrument and Control Engineers.) | 1-13 |
| A | JP 4-99939 A (MITSUBISHI HEAVY IND LTD) 31 March 1992 (1992-03-31) p. 2, lower left column, line 15 to p. 3, lower left column, line 18 | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 November 2022** | **22 November 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
Information on patent family members

International application No.

**PCT/JP2022/033059**

| Patent document cited in search report | Publication date (day/month/year) | Patent family member(s) | Publication date (day/month/year) |
|---|---|---|---|
| JP 4-99939 A | 31 March 1992 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. PASQUALETTI ; S. ZAMPIERI ; F. BULLO.** Controllability metrics, limitations and algorithms for complex networks. *IEEE Transactions on Control of Network Systems,* 2014, vol. 1 (1), 40-52
- **V. TZOUMAS ; M.A. RAHIMIAN ; G.J. PAPPAS ; A. JADBABAIE.** Minimal actuator placement with bounds on control effort. *IEEE Transactions on Control of Network Systems,* 2016, vol. 3 (1), 40-52
- **K. KASHIMA.** Noise response data reveal novel controllability Gramian for nonlinear network dynamics. *Scientific Reports,* 2016, vol. 6
- **V.M. PRECIADO ; M.A. RAHIMIAN.** Controllability Gramian spectra of random networks. *2016 American Control Conference,* 2016, 3874-3879
- **X. CHENG ; J.M.A. SCHERPEN.** A new controllability Gramian for semistable systems and its application to approximation of directed networks. *56th Annual Conference on Decision and Control,* 2017, 3823-3828
- **S. ZHAO ; F. PASQUALETTI.** Networks with diagonal controllability Gramians: analysis, graphical conditions, and design algorithms. *Automatica,* 2019, vol. 102, 10-18
- **Z. WANG ; D. LIU.** Data-based controllability and observability analysis of linear discrete-time systems. *IEEE Transactions on Neural Networks,* 2011, vol. 22 (12), 2388-2392
- **D. BHATTACHARJEE ; B. KLOSE ; G.B. JACOBS ; M.S. HEMATI.** Data-driven selection of actuators for optimal control of airfoil separation. *Theoretical and Computational Fluid Dynamics,* 2020, vol. 34 (4), 557-575
- **K. ZHOU ; J.C. DOYLE ; K. GLOVER.** Robust and Optimal Control. Prentice Hall, 1996
- **C. KENNEY ; G. HEWER.** Trace norm bounds for stable Lyapunov operators. *Linear Algebra and its Applications,* 1995, vol. 221, 1-18